# EUROPEAN PATENT SPECIFICATION

(11) **EP 4 340 495 B1**
(45) Date of publication and mention of the grant of the patent: **28.10.2026**
(21) Application number: 21969470.0
(22) Date of filing: 29.12.2021
(51) Int. Cl.: H04L 47/24, H04L 47/56, H04L 47/28, H04L 43/087

(54) **SCHEDULING CYCLE ADJUSTMENT METHOD AND NETWORK DEVICE**
PLANUNGSZYKLUSANPASSUNGSVERFAHREN UND NETZWERKVORRICHTUNG
PROCÉDÉ DE RÉGLAGE DE CYCLE DE PLANIFICATION ET DISPOSITIF DE RÉSEAU

(43) Date of publication of application: 20.03.2024
(73) Proprietor: New H3C Technologies Co., Ltd., Hangzhou, Zhejiang 310052 (CN)
(72) Inventor: GUO, Daorong, Beijing 100102 (CN)
(74) Representative: Grünecker Patent- und Rechtsanwälte PartG mbB
(86) International application number: PCT/CN2021/142635
(87) International publication number: WO 2023/123102

(56) References cited:
- WO-A1-2021/051368
- WO-A1-2021/223834
- CN-A- 112 583 510
- CN-A- 112 585 914
- JP-A- 2020 205 617
- US-A1- 2018 035 442
- US-A1- 2020 304 429
- US-A1- 2021 306 910

## Description

### TECHNICAL FIELD

The present disclosure relates to the field of communication technologies, and in particular to a method of adjusting a scheduling cycle and a network device.

### BACKGROUND

Deterministic network (DetNet) may provide deterministic service functions for carried services within a network domain. These deterministic service functions may include latency and packet loss rate and the like. Time Sensitive Networking (TSN) is a deterministic network implemented based on a local area network. In the TSN, a deterministic transmission at a forwarding layer is guaranteed by employing Cyclic Queuing and Forwarding (CQF), so as to provide deterministic service functions for the carried services. For ease of descriptions, a service flow with deterministic service functions (e.g. latency, packet loss rate and the like) transmitted in the deterministic network is referred to as a deterministic traffic. For another service flow different from the deterministic traffic, best-effort forwarding may be employed. Therefore, Another service flow different from the deterministic traffic is referred to as best-effort traffic.
US 2020/0304429 A1 discloses notification of timing mismatches for queues in time sensitive networking (TSN). A module monitors an arrival time of a frame at a node that selectively transmits frames from different flows in different time windows . The module determines whether the arrival time is within a time window and generates a signal in response to the arrival time being outside of the time window . In some cases , the frame is received at an ingress port of the node and the arrival time of the frame is recorded in an event database in response to receiving the frame at the ingress port . The arrival time of the event is accessed from the event database and this information is used to determine whether the arrival time is within the time window . The time window can be modified in response to the arrival time being outside the time window

### SUMMARY

It is therefore the object of the present invention to provide an improved method of adjusting a scheduling cycle based on cycle specified queuing and forwarding, CSQF, applied to a first network device, and a corresponding network device.
This object is solved by the subject matter of the independent claims 1 and 11.
Preferred embodiments are defined by the dependent claims.

The present disclosure provides a method of adjusting a scheduling cycle, which is applied to a first network device. The method includes: after receiving a packet from a second network device, determining a sending scheduling cycle of the packet on the second network device, and determining a reception scheduling cycle of the packet on the first network device; determining a target scheduling cycle corresponding to the sending scheduling cycle on the first network device, where the packet corresponds to a cycle queue (CQ) corresponding to the target scheduling cycle; if it is determined that an initial time length of the scheduling cycle is to be adjusted based on a number of interval cycles between the reception scheduling cycle and the target scheduling cycle, adjusting an actual time length of the scheduling cycle on the first network device from the initial time length to a target time length.

The present disclosure provides a network device, including: a processor and a machine readable storage medium, where the machine readable storage medium store machine executable instructions executable by the processor; the processor is configured to execute the machine executable instructions to perform the method of adjusting a scheduling cycle disclosed in the above embodiments of the present disclosure.

It can be seen from the above technical solution that, in the embodiments of the present disclosure, packet transmission of the deterministic network is achieved based on Cycle Specified Queuing and Forwarding (CSQF), and the scheduling cycle of the deterministic network is dynamically controlled by adjusting the actual time length of the scheduling cycle of the deterministic network (from the initial time length to the target time length), such that the CSQF is independent of strict frequency synchronization and adaptive to change of link transmission latency. In this way, the adaptivity of the CSQF in a wide area network is greatly improved. By implementing the CSQF, the deterministic transmission capability is provided without affecting ongoing transmission services.

### BRIEF DESCRIPTION OF THE DRAWINGS

FIG. 1 is a schematic diagram illustrating a working principle of CSQF according to an embodiment of the present disclosure.
FIG. 2 is a schematic diagram of comparison of CSQF and CQF according to an embodiment of the present disclosure.
FIGS. 3A to 3C are schematic diagrams illustrating a mapping relationship of scheduling cycles according to an embodiment of the present disclosure.
FIG. 4 is a flowchart illustrating a method of adjusting a scheduling cycle according to an embodiment of the present disclosure.
FIGS. 5A to 5B are schematic diagrams illustrating division of a scheduling cycle of CSQF according to an embodiment of the present disclosure.
FIGS. 6A to 6C are schematic diagrams illustrating a scheduling cycle according to an embodiment of the present disclosure.
FIGS. 7A to 7F are schematic diagrams of a structure and a processing flow of a network device according to an embodiment of the present disclosure.

### DETAILED DESCRIPTION OF THE EMBODIMENTS

Time sensitive network (TSN) is a deterministic network implemented based on local area network. In the TSN, deterministic transmission of a forwarding layer is guaranteed by using cyclic queuing and forwarding (CQF) so as to provide deterministic service functions to carried services. The CQF is only an example of providing deterministic services, and the deterministic transmission of the forwarding layer may also be guaranteed in another way, which is not limited herein. The CQF, as a technology close to CSQF, is taken as an example in this embodiment. The basic working principle of the CQF is as follows: an egress interface of each network device is associated with two queues, and a time domain is divided into two cycles, and the two queues are alternately sent and received within the two cycles. For example, the two queues are denoted as queue Q1 and queue Q2, and the two cycles are denoted as T0 cycle and T1 cycle. Within the T0 cycle, the queue Q1 is sent and the queue Q2 is received (the reception of the queue Q1 is off, the reception of the queue Q2 is on, the sending of the queue Q1 is on and the sending of the queue Q2 is off); within the T1 cycle, the queue Q1 is received and the queue Q2 is sent and so on. Thus, the queue Q1 and the queue Q2 can be alternately sent and received based on odd and even cycles.

The CQF requires that a packet is transmitted in one cycle for each hop. That is, a packet is received within a cycle of a network device and sent within a next cycle, and a next network device packet receives the packet within a next cycle, and so on. In this case, when the cycle T is a determined value, a transmission latency of the packet on a path (end-to-end transmission latency) is determined. A minimum value of the transmission latency is (H-1)*T, and a maximum value of the transmission latency is (H+1)*T, where T is a hop number representing a total number of network devices passed through on the path.

The CQF which is a technology based on local area network cannot be implemented in wide area network. Hence, in order to achieve deterministic transmission of the wide area network, Cycle Specified Queuing and Forwarding (CSQF) is proposed based on the CQF, where the CSQF is applied in combination with Segment Routing (SR) or SRv6 to achieve deterministic transmission of the wide area network. The SR is based on Multi-Protocol Label Switching (MPLS), and SRv6 is based on IPV6.

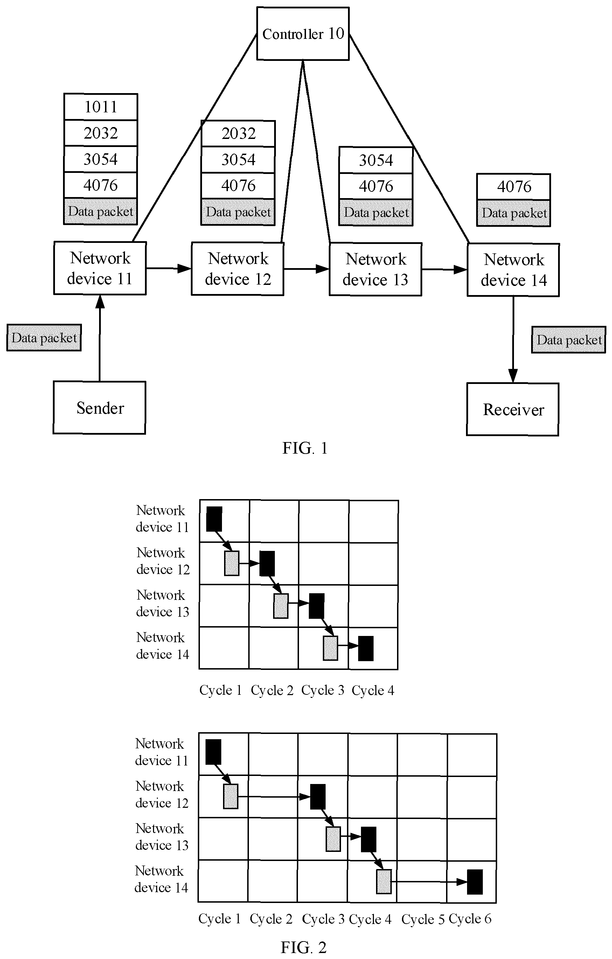

FIG. 1 is a schematic diagram illustrating a working principle of CSQF. A controller 10 is configured to collect information of each network device, such as sending capability, interface, cycle number and intra-node maximum jitter and the like. For a deterministic transmission requirement between a sender and a receiver, the controller 10, if detecting there is sufficient transmission resource through calculation, allocates a transmission path and distributes information of the transmission path to an edge node. As shown in FIG. 1, the transmission path between the sender and the receiver may be network device 11 - network device 12 - network device 13 - network device 14, where the edge node in this transmission path (i.e. the first network device) is the network device 11. After receiving a packet to be forwarded, the network device 11 adds information of each network device in the transmission path to the packet, for example, node identifiers of the network devices in the path (e.g. locator or the like in the Segment Identifier (SID) of SRv6), sending interfaces of the network devices and cycles used for sending in the network devices. Thus, when the packet reaches a particular network device, the network device may obtain the corresponding interface and cycle information and then store the packet into a queue corresponding to the cycle. For each network device, the packets in each queue may be sent cyclically based on a particular cycle, that is, each queue corresponds to one cycle, and the packets in the queue may be sent within this cycle. The cycling of the network devices is based on fixed mode. Hence, in the network device 11, the specified cycle of each packet of the sender is unchanged, and the cycle of forwarding the packet from the sender to the receiver on each network device is determined. Therefore, the entire latency of the packet is determined, thus achieving deterministic transmission.

In conclusion, it can be seen that the implementation process of the CSQF is similar to the implementation process of the CQF, with differences between them being that: the CSQF requires at least three queues (e.g. 3, 6, 8, 9, 10, 12, 15 or the like), and within each cycle, there is only one queue in a sent state and other queues are in a received state. For the CQF, it is required that the cycles of the network devices should be strictly synchronized, including phase synchronization; for the CSQF, it is only required that the frequencies of the cycles should be synchronized and the phase synchronization is not required. Further, for a case in which a transmission latency of a hop cannot be completed within one cycle, a queue for a next cycle of transmission may be specified so as to adapt to the transmission latencies of different network devices in the wide area network.

FIG. 2 is a schematic diagram of comparison of CSQF and CQF. For the CQF, in a transmission process of a packet, the network device 11 sends the packet in cycle 1, the network device 12 receives the packet in cycle 1 and sends the packet in cycle 2, the network device 13 receives the packet in cycle 2 and sends the packet in cycle 3, and the network device 14 receives the packet in cycle 3 and sends the packet in cycle 4. For the CSQF, it is assumed that the CSQF requires three queues. In a transmission process of a packet, the network device 11 sends the packet in cycle 1, the network device 12 receives the packet in cycle 1 or 2, and sends the packet in cycle 3, the network device 13 receives the packet in cycle 3 and sends the packet in cycle 4, and the network device 14 receives the packet in cycle 4 or 5, and sends the packet in cycle 6.

In an implementation process of the CSQF, it can be ensured that the entire latency of the packet is determined for the following reason: each network device divides time slices with a fixed length as cycle and unified traffic scheduling is performed on the deterministic traffic such that it can be forwarded in the determined time slice. For each network device on the transmission path, the sending time is limited to be within a specific time slice, such that the latency jitter of the packet on the network device is determined. No matter how many network devices are added, the jitter of a previous network device will not affect a jitter latency of a next network device. When a total number of the network devices is increased, a total latency for packet forwarding will be increased. When a distance of the path that the packet runs through is increased, it is possible that the total latency for packet forwarding will be increased.

For the last network device, the packet is only received and sent within a determined time slice, that is, a jitter range of the packet in the last network device is limited to be within one determined time slice.

Although the CSQF can achieve deterministic transmission in the wide area network to provide deterministic service functions to carried services, there is no reasonable solution in the prior arts about how each network device achieves the CSQF.

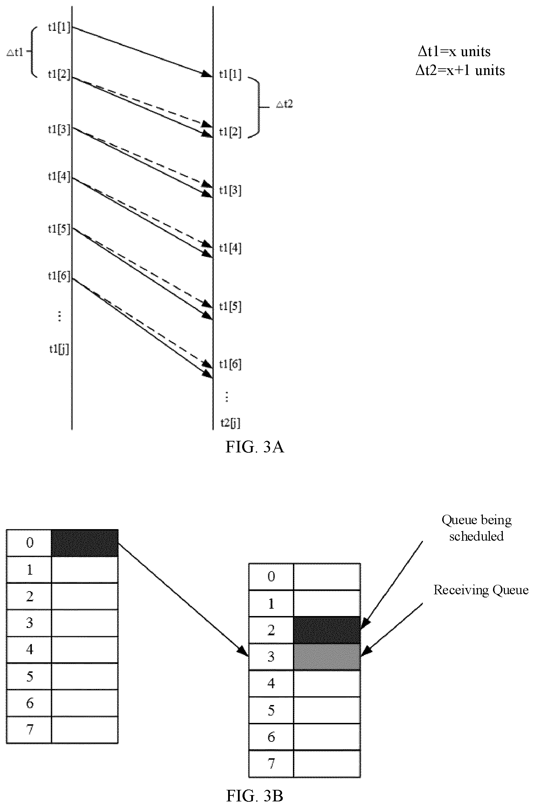

For example, the scheduling cycle of the CSQF is to satisfy frequency synchronization and otherwise generates an accumulated error over time, resulting in failure of scheduling cycle between upstream and downstream network devices. FIG. 3A is a schematic diagram of generating an accumulated error due to frequency asynchronization. It is assumed that the network device 1 and the network device 2 have respective independent clock sources, and there are no Synchronous Ethernet (SyncE) mechanism and Precision Time Synchronization Protocol (PTP) hardware support between the network device 1 and the network device 2, that is, clock synchronization cannot be performed between the network device 1 and the network device 2. On this basis, if there is frequency difference between the network device 1 and the network device 2, when they use their respective clock sources to achieve the scheduling cycle of CSQF, the network device 1 and the network device 2 have different lengths of schedule cycles. Although the difference is very small, change will be brought to a mapping relationship of the scheduling cycles along with elapse of time and error accumulation, finally leading to latency jump and hence large jitter.

Furthermore, when a link is affected by thermal expansion (also called catenary sagging), a length of a broadband copper wire (e.g. cable network) may also be affected by the temperature of noon and evening, bringing change of up to 20%. In this way, the transmission latency of the network device may also be changed, which may also bring change to the mapping relationship of the scheduling cycles, finally producing latency jump and hence large jitter.

FIG. 3B illustrates a mapping relationship of the scheduling cycles of the network devices. The scheduling cycle a0 of the network device 1 and the scheduling cycle b3 of the network device 2 have a mapping relationship, that is, the packet sent by the network device 1 in the scheduling cycle a0 may be stored by the network device 2 into a cyclic queuing (CQ) corresponding to the scheduling cycle b3. When the packet sent by the network device 1 in the scheduling cycle a0 reaches the network device 2, if the scheduling cycle b2 of the network device 2 is being scheduled, the packet may be stored into the CQ corresponding to the scheduling cycle b3. Hence, the above mapping relationship is reasonable.

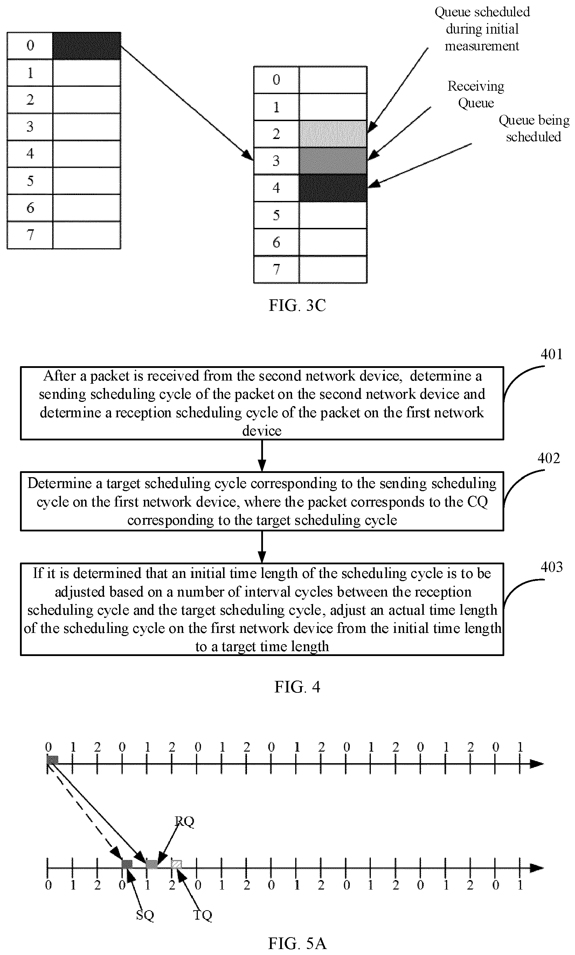

Since the frequencies of the scheduling cycles of the network device 1 and the network device 2 are not synchronous and continuously accumulate, when the packet sent by the network device 1 in the scheduling cycle a0 reaches the network device 2 over a period of time as shown in FIG. 3C, if the scheduling cycle b4 of the network device 2 is being scheduled, the packet cannot be stored into the CQ corresponding to the scheduling cycle b3. Namely, the above mapping relationship is not reasonable, and the mapping relationship between the scheduling cycle a0 and the scheduling cycle b3 fails. In conclusion, the accumulated error may result in non-correspondence between the scheduling cycles of the network device 1 and the network device 2, thus bringing large jitter and even congestion loss. In this case, the implementation of the CSQF cannot achieve theoretical effect, and even the CSQF is unavailable.

In some examples, the CSQF queue may include a Sending Queue (SQ), a Receiving Queue (RQ), and a Tolerating Queue (TQ). The SQ is a queue being sent in the CSQF, and RQ is a queue being received in the CSQF. A received packet which cannot normally enter the RQ due to jitter and the like may enter the TQ. For ease of descriptions, in this embodiment, the SQ, the RQ and the TQ can be referred to as CQ, i.e. the CQ corresponding to the scheduling cycle.

In some examples, the scheduling cycle may also be referred to as scheduling time slot. For example, the above scheduling cycles may be scheduling time slots, which is not limited herein. For ease of descriptions, descriptions are made with the scheduling cycle as an example in the embodiment.

For the failure of the mapping relationship, an embodiment of the present disclosure provides a method of achieving a wide-area deterministic network based on CSQF, which can avoid the failure of the mapping relationship between the scheduling cycles, and enable the CSQF to be independent of strict frequency synchronization and adapt to change of latency of the link transmission. In this way, the adaptivity of the CSQF in the wide area network is greatly improved, and the deterministic transmission capability can be provided by implementing the CSQF.

An embodiment of the present disclosure provides a method of adjusting a scheduling cycle. The method may be applied to a system in which CSQF is adopted to implement a deterministic network, and the system may include a plurality of network devices (the network device may also be called network node or forwarding node), two adjacent network devices of which are referred to as a first network device and a second network device, where the second network device sends a packet to the first network device. FIG. 4 is a schematic flowchart illustrating a method of adjusting scheduling cycle. The method may be applied to the first network device and may include the following steps.

At step 401, after a packet is received from the second network device, a sending scheduling cycle of the packet on the second network device is determined and a reception scheduling cycle of the packet on the first network device is determined.

In some examples, the sending scheduling cycle of the packet on the second network device represents that the packet is sent by the second network device within the sending scheduling cycle, for example, the second network device sends the packet in a particular scheduling cycle. For ease of distinguishing, the scheduling cycle may be referred to as the sending scheduling cycle. The reception scheduling cycle of the packet on the first network device represents that the packet is received by the first network device within the reception scheduling cycle, for example, the first network device receives the packet from the second network device in a particular scheduling cycle. For ease of distinguishing, the scheduling cycle may be referred to as the reception scheduling cycle.

In some examples, the second network device sends the packet in a specified scheduling cycle and the first network device determines the sending scheduling cycle of the packet on the second network device is the specified scheduling cycle. For example, the second network device fixedly sends a packet in the scheduling cycle a0 (sending a packet only in the scheduling cycle a0), and the specified scheduling cycle of the second network device is the scheduling cycle a0. On this basis, the first network device determines the sending scheduling cycle is the scheduling cycle a0. Alternatively, the second network device adds cycle information (e.g. cycle identifier) of the sending scheduling cycle to the packet when sending the packet, and the first network device determines the sending scheduling cycle of the packet on the second network device is a scheduling cycle corresponding to the cycle information. For example, when the second network device sends a packet in the scheduling cycle a0, the cycle information of the scheduling cycle a0 may be added to the packet. Thus, the first network device determines the sending scheduling cycle is the scheduling cycle a0 corresponding to the cycle information.

In some examples, the first network device may, after receiving the packet from the second network device, determine a scheduling cycle being performed on the first network device, where the scheduling cycle is the reception scheduling cycle of the packet on the first network device. For example, when the first network device receives the packet, if the scheduling cycle b2 of the first network device is being scheduled, it is determined that the reception scheduling cycle is the scheduling cycle b2.

At step 402, a target scheduling cycle corresponding to the sending scheduling cycle on the first network device is determined, where the packet corresponds to the CQ corresponding to the target scheduling cycle, for example, the packet is stored into the CQ corresponding to the target scheduling cycle.

In some examples, a mapping relationship between the scheduling cycle of the second network device and the scheduling cycle of the first network device may be pre-configured. For example, a mapping relationship between the scheduling cycle a0 of the second network device and the scheduling cycle b3 of the first network device is pre-configured, which represents a packet sent by the second network device in the scheduling cycle a0 is to be stored in the CQ corresponding to the scheduling cycle b3. On this basis, after determining the sending scheduling cycle of the packet on the second network device, the first network device may determine the target scheduling cycle corresponding to the sending scheduling cycle. For example, if the sending scheduling cycle is the scheduling cycle a0, the target scheduling cycle is the scheduling cycle b3.

In an example, the first network device may maintain a session information table which may include a mapping relationship among node identifier (e.g. unique identifier of the network device), egress interface information (e.g. egress interface identifier of the first network device), and associated scheduling cycle. The associated scheduling cycle is an associated scheduling cycle corresponding to a specified scheduling cycle of a network device corresponding to the node identifier, and thus, a packet sent in the specified scheduling cycle is to be stored in the CQ corresponding to the associated scheduling cycle.

On this basis, after receiving the packet from the second network device, the first network device may acquire a node identifier of the second network device and the egress interface information corresponding to the packet (representing the packet is sent via the egress interface corresponding to the egress interface information). For example, the node identifier and the egress interface information are analyzed out from the packet. The first network device queries the configured session information table based on the node identifier and the egress interface information to obtain an associated scheduling cycle corresponding to the specified scheduling cycle of the second network device. For example, since the session information table includes the mapping relationship among node identifier, egress interface information and associated scheduling cycle, the associated scheduling cycle can be obtained by querying the session information table.

Based on the sending scheduling cycle, the associated scheduling cycle and the specified scheduling cycle, the first network device may determine the target scheduling cycle corresponding to the sending scheduling cycle on the first network device. A number of interval cycles between the sending scheduling cycle and the specified scheduling cycle may be equal to a number of interval cycles between the target scheduling cycle and the associated scheduling cycle. For example, if the specified scheduling cycle of the second network device is the scheduling cycle a0 and the associated scheduling cycle of the first network device is the scheduling cycle b3, when the second network device sends a packet in the scheduling cycle a0, that is, the sending scheduling cycle is the scheduling cycle a0, the number of the interval cycles between the sending scheduling cycle and the specified scheduling cycle is 0. Thus, the target scheduling cycle is the scheduling cycle b3. For another example, if the second network device sends a packet in a scheduling cycle a1, that is, the sending scheduling cycle is the scheduling cycle a1, the number of the interval cycles between the sending scheduling cycle and the specified scheduling cycle is 1, and the target scheduling cycle is a scheduling cycle b4.

In an example, for a packet that the second network device sends to the first network device, the packet may be a test packet or a data packet belonging to a deterministic traffic. If the packet is a data packet, the data packet may be stored in the CQ corresponding to the target scheduling cycle. In the target scheduling cycle, the data packets in the CQ corresponding to the target scheduling cycle are sent to an external device.

For example, for a packet transmission process of the deterministic network, a packet may be interacted between the second network device and the first network device. For example, the second network device may send a data packet belonging to a best-effort traffic to the first network device, or send a data packet belonging to a deterministic traffic to the first network device. The data packet belonging to the best-effort traffic will not be redundantly described herein. For a data packet belonging to the deterministic traffic, the first network device may, after receiving the data packet, store the data packet into the CQ corresponding to the target scheduling cycle. In the target scheduling cycle, the data packets in the CQ corresponding to the target scheduling cycle are sent to an external device. On this basis, in this embodiment, a process of adjusting the scheduling cycle may be triggered based on the data packet, that is, adjustment is performed on the scheduling cycle based on the flow shown in FIG. 4.

For another example, in this embodiment, in order to adjust the scheduling cycle, the second network device may send a test packet to the first network device, and the first network device may trigger a process of adjusting the scheduling cycle based on the test packet, that is, adjustment is performed on the scheduling cycle based on the flow shown in FIG. 4. In this case, the first network device is not to store the test packet into the CQ corresponding to the target scheduling cycle nor send the test packet to the external device. The test packet triggers the process of adjusting the scheduling cycle only on the first network device.

At step 403, if it is determined that an initial time length of the scheduling cycle is to be adjusted based on a number of interval cycles between the reception scheduling cycle and the target scheduling cycle, an actual time length of the scheduling cycle on the first network device is adjusted from the initial time length to a target time length, namely, the actual time length is updated to the target time length.

In some examples, after the reception scheduling cycle and the target scheduling cycle are determined, a number of interval cycles between the reception scheduling cycle and the target scheduling cycle may be determined, and whether to adjust the initial time length of the scheduling cycle is determined based on the number of the interval cycles. If the initial time length of the scheduling cycle is to be adjusted, the initial time length may be adjusted to the target time length, that is, the actual time length of scheduling cycle is updated from the initial time length to the target time length. If the initial time length of the scheduling cycle is not to be adjusted, the initial time length of the scheduling cycle is maintained unchanged, that is, the actual time length of the scheduling cycle is maintained as the initial time length.

In some examples, if the reception scheduling cycle is before the target scheduling cycle (that is, the reception scheduling cycle is earlier than the target scheduling cycle) and the number of the interval cycles is greater than a first number threshold, it is determined that the initial time length of the scheduling cycle is to be adjusted; if the reception scheduling cycle is before the target scheduling cycle and the number of the interval cycles is not greater than the first number threshold, it is determined that the initial time length of the scheduling cycle is not to be adjusted. If the reception scheduling cycle is after the target scheduling cycle (that is, the reception scheduling cycle is later than the target scheduling cycle) and the number of the interval cycles is greater than a second number threshold, it is determined that the initial time length of the scheduling cycle is to be adjusted; if the reception scheduling cycle is after the target scheduling cycle and the number of the interval cycles is not greater than the second number threshold, it is determined that the initial time length of the scheduling cycle is not to be adjusted. The first number threshold and the second number threshold may be same or different. The first number threshold may be 0, 1, 2, and the like, which is not limited herein. The second number threshold may be 0, 1, 2 and the like, which is not limited herein. For ease of descriptions, in subsequent embodiments, descriptions are made with the first number threshold 1 and the second number threshold 1 as example.

In some examples, when the initial time length is adjusted to the target time length, if the reception scheduling cycle is before the target scheduling cycle, decremental adjustment is performed on the initial time length based on a configured time length adjustment amount (configured based on experiences) to obtain an adjusted target time length. If the reception scheduling cycle is after the target scheduling cycle, incremental adjustment is performed on the initial time length based on the time length adjustment amount to obtain an adjusted target time length.

For example, if the reception scheduling cycle is the scheduling cycle b2, and the target scheduling cycle is the scheduling cycle b3, the number of the interval cycles is 1, and the reception scheduling cycle is before the target scheduling cycle. Since the number 1 of the interval cycles is not greater than the first number threshold 1, it is not required to adjust the initial time length of the scheduling cycle.

For another example, if the reception scheduling cycle is the scheduling cycle b1, and the target scheduling cycle is the scheduling cycle b3, the number of the interval cycles is 2, and the reception scheduling cycle is before the target scheduling cycle. Since the number 2 of the interval cycles is greater than the first number threshold 1, it is required to adjust the initial time length of the scheduling cycle.

In this case, since the reception scheduling cycle is before the target scheduling cycle, decremental adjustment may be performed on the initial time length based on the time length adjustment amount to obtain an adjusted target time length, that is, the target time length may be a difference between the initial time length and the time length adjustment amount.

For another example, if the reception scheduling cycle is the scheduling cycle b4, and the target scheduling cycle is the scheduling cycle b3, the number of the interval cycles is 1, and the reception scheduling cycle is after the target scheduling cycle. Since the number 1 of the interval cycles is not greater than a second number threshold 1, it is not required to adjust the initial time length of the scheduling cycle.

For another example, if the reception scheduling cycle is the scheduling cycle b5, and the target scheduling cycle is the scheduling cycle b3, the number of the interval cycles is 2, and the reception scheduling cycle is after the target scheduling cycle. Since the number 2 of the interval cycles is greater than the second number threshold 1, it is required to adjust the initial time length of the scheduling cycle.

In this case, since the reception scheduling cycle is after the target scheduling cycle, incremental adjustment may be performed on the initial time length based on the time length adjustment amount to obtain an adjusted target time length, that is, the target time length may be a sum of the initial time length and the time length adjustment amount.

In some examples, when the actual time length of the scheduling cycle on the first network device is the initial time length, if the first network device sequentially includes scheduling cycle b1, scheduling cycle b2, and scheduling cycle b3 ..., an interval between the ending time and the start time of the scheduling cycle b1 is the initial time length, and the interval between the ending time and the start time of the scheduling cycle b2 (the start time of the scheduling cycle b2 is the ending time of the scheduling cycle b1) is the initial time length, and so on.

When the actual time length of the scheduling cycle on the first network device is the target time length, the interval between the ending time and the start time of the scheduling cycle b1 is the target time length, and the interval between the ending time and the start time of the scheduling cycle b2 is the target time length and so on.

In some examples, a total adjustment number K of scheduling cycles may be determined based on the first clock count number corresponding to the initial time length, the configured time length adjustment amount and the number of the interval cycles, and actual time lengths of K continuous scheduling cycles on the first network device are updated to the target time length (i.e. the initial time length is updated to the target time length). After the actual time lengths of the K continuous scheduling cycles are updated to the target time length, the actual time length of the scheduling cycle on the first network device may also be updated to the initial time length (the target time length is updated to the initial time length).

For example, the total adjustment number K may be determined in the following formula: K=the first clock count number*the number of the interval cycles/the time length adjustment amount. The above formula is only an example, which is not limited herein. After the total adjustment number K is obtained, the actual time lengths of the K continuous scheduling cycles may be updated to the target time length.

For example, it is assumed that the first network device sequentially includes scheduling cycle b1, scheduling cycle b2, scheduling cycle b3... and the actual time length of the scheduling cycle b1 is the initial time length. Based on this, if it is determined that the initial time length of the scheduling cycle is to be adjusted in the scheduling cycle b1 and the initial time length is adjusted to the target time length, the actual time length of the scheduling cycle b2 is the target time length, and the actual time length of the scheduling cycle b3 is the target time length and so on. After the actual time lengths of the K continuous scheduling cycles (K scheduling cycles starting from the scheduling cycle b2) are the target time length, the actual time length of the (K+1)-th scheduling cycle is updated to the initial time length, and the actual time length of each scheduling cycle is the initial time length until it is determined that the initial time length of the scheduling cycle is to be adjusted next time and the initial time length is adjusted to the target time length, and so on.

The process of adjusting the scheduling cycle is described below in combination with specific application scenarios.

FIG. 5A is a schematic diagram illustrating division of scheduling cycles of CSQF. For the first network device, SQ is the sending queue which corresponds to the scheduling cycle b0, RQ is the reception queue which corresponds to the scheduling cycle b1 immediately after the scheduling cycle b0, and TQ is the tolerating queue which corresponds to the scheduling cycle b2 immediately after the scheduling cycle b1.

In the above application scenario, the mapping relationship of the scheduling cycles may fail due to jitter and the like. For example, when the scheduling cycle a0 of the second network device corresponds to the scheduling cycle b1 of the first network device, if the first network device receives, in the scheduling cycle b0, a packet sent by the second network device in the scheduling cycle a0, the packet is stored into the RQ corresponding to the scheduling cycle b1. But, if the first network device receives the packet in the scheduling cycle b2, the packet cannot be stored into the RQ corresponding to the scheduling cycle b1. In this case, the mapping relationship of the scheduling cycle a0 and the scheduling cycle b1 fails.

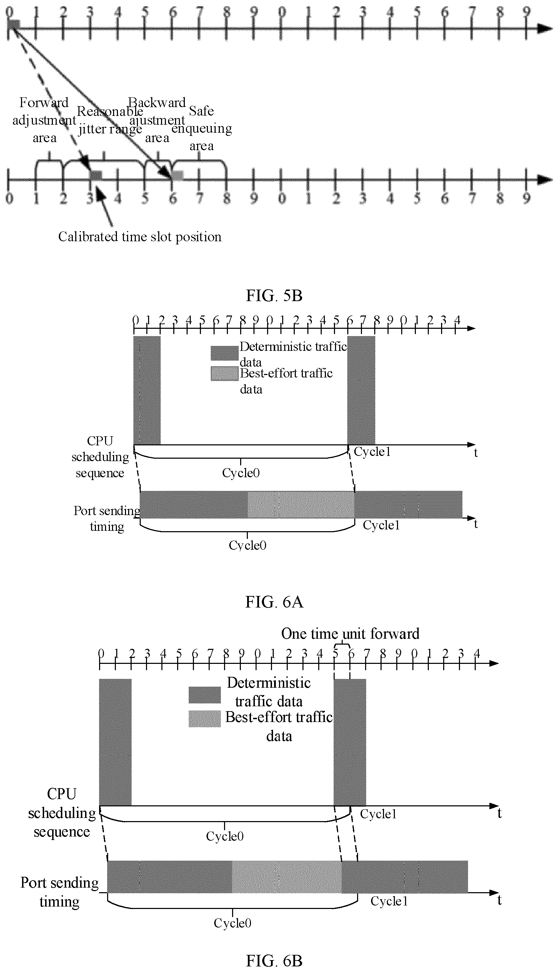

For the above findings, in an embodiment of the present disclosure, the actual time length of the scheduling cycle is adjusted to avoid failure of the mapping relationship of the scheduling cycles. FIG. 5B is a schematic diagram illustrating division of scheduling cycles of CSQF. In this application scenario, the CSQF includes, for example, 10 queues, which correspond to 10 scheduling cycles. 10 scheduling cycles of the second network device are scheduling cycle a0, scheduling cycle a1, scheduling cycle a2, ... and scheduling cycle a9; 10 scheduling cycles of the first network device are scheduling cycle b0, scheduling cycle b1, and scheduling cycle b2... and scheduling cycle b9. The number of the queues of the CSQF may be more or less, as long as the number of the queues can be greater than or equal to 3.

In this application scenario, if the sending scheduling cycle of the packet on the second network device is the scheduling cycle a0, the target scheduling cycle corresponding to the scheduling cycle a0 on the first network device is the scheduling cycle b3, that is, there is a mapping relationship between the scheduling cycle a0 and the scheduling cycle b3. The above mapping relationship is only an example, which is not limited herein. For ease of distinguishing, the target scheduling cycle is denoted as Anchor which is the scheduling cycle b3 herein.

With Anchor as a reference, extension is performed back and forth within a range to form a reasonable jitter area. For example, forward extension by a first number threshold of scheduling cycles is performed, where the first number threshold is set to Jitter 1, which, for example, is valued as 1. Backward extension by a second number threshold of scheduling cycles is performed where the second number threshold is set to Jitter2, which, for example, is valued as 1. Thus, the reasonable jitter area is the scheduling cycle b2, the scheduling cycle b3 and the scheduling cycle b4.

Over a period of time, when a packet sent by the second network device to the first network device reaches the first network device, if the first network device is scheduling the scheduling cycle b2, the scheduling cycle b3 or the scheduling cycle b4, it indicates that it is not required to adjust the initial time length of the scheduling cycle. When the packet reaches the first network device, if the first network device is scheduling the scheduling cycle b1, it indicates that the scheduling cycle of arrival of the packet is relatively early, it is required to adjust the initial time length of the scheduling cycle, for example, reduce the initial time length of the scheduling cycle such that the scheduling cycle of arrival of the packet can be in the scheduling cycle b2, the scheduling cycle b3 or the scheduling cycle b4. When the packet reaches the first network device, if the first network device is scheduling the scheduling cycle b5, the scheduling cycle b6 or the scheduling cycle b7, it indicates that the scheduling cycle of arrival of the packet is relatively late, it is required to adjust the initial time length of the scheduling cycle, for example, increase the initial time length of the scheduling cycle, such that the scheduling cycle of arrival of the packet can be in the scheduling cycle b2, the scheduling cycle b3 or the scheduling cycle b4.

For these scheduling cycles before the reasonable jitter area, such as the scheduling cycle b0 and the scheduling cycle b1 etc., an area in which these scheduling cycles are is called forward adjustment area denoted as Area1. For these scheduling cycles after the reasonable jitter area, such as the scheduling cycle b5, the scheduling cycle b6 and the scheduling cycle b7 etc., an area in which these scheduling cycles are is called backward adjustment area denoted as Area2.

In order to avoid excessively large jitter between adjacent packets resulting from drastic adjustment, a progressive adjustment manner may be adopted in this embodiment to adjust the initial time length of the scheduling cycle, that is, a total adjustment number K of scheduling cycles is determined. Thus, adjustment to the initial time length can be completed after adjustments for K scheduling cycles. It is assumed that the initial time length of the scheduling cycle is C in the unit of ticks (clock count unit), the number of the interval cycles between the reception scheduling cycle and the target scheduling cycle is TsNum, and ticks (time length adjustment amount) to be adjusted in each scheduling cycle are Jitter_Adjustment. When the initial time length of the scheduling cycle is to be increased, the Jitter_Adjustment is a positive value; when the initial time length of the scheduling cycle is to be decreased, the Jitter_Adjustment is a negative value. Based on this, the total adjustment number of the scheduling cycles is denoted as Adjust_Counter, and thus, Adjust_Counter = C*TsNum/|Jitter_Adjustment|.

If the clock frequency of the timer generating the scheduling cycle is 1G, that is, each tick is 1ns, it indicates that one clock signal is generated every other 1ns (each tick). If the initial time length of the scheduling cycle is 30us, 30000 ticks counted correspond to one scheduling cycle. Therefore, C is 30000, which represents the first clock count number corresponding to the initial time length. If the reception scheduling cycle is the scheduling cycle b1 and the target scheduling cycle is the scheduling cycle b3, the number of the interval cycles between the reception scheduling cycle and the target scheduling cycle is 2, that is, TsNum is 2.

Because the reception scheduling cycle is before the target scheduling cycle and the number 2 of the interval cycles is greater than the first number threshold 1, decremental adjustment may be performed on the initial time length based on the time length adjustment amount Jitter_Adjustment, for example, the initial time length of scheduling cycle is shortened, that is, the ticks counted by the timer are reduced. If the Jitter_Adjustment adjusted each time is -1000 where "-" represents decremental adjustment is performed on the initial time length, when the initial time length corresponds to 30000 ticks, the target time length will correspond to 29000 ticks after decremental adjustment.

In some examples, based on Jitter_Adjustment, C and TsNum, the total adjustment number Adjust_Counter of the scheduling cycles is determined in the following manner: Adjust_Counter=C*TsNum/|Jitter_Adjustment|= 30000*2/1000= 60. To sum up, each scheduling cycle may be adjusted from the initial time length 30us to the target time length (30us-1us). Over 60 adjustments, a total adjustment time length is 29us*60=1.74ms. The adjustment process of the scheduling cycles is extended to 1.74ms, and the each scheduling cycle can be reduced by 1000ns, which is almost unperceivable macroscopically. Therefore, the packet jitter resulting from change of the scheduling cycles can be negligible.

If the reception scheduling cycle is the scheduling cycle b5 and the target scheduling cycle is scheduling cycle b3, the number of the interval cycles between the reception scheduling cycle and the target scheduling cycle is 2, that is, TsNum is 2.

Since the reception scheduling cycle is after the target scheduling cycle and the number 2 of the interval cycles is greater than the second number threshold 1, the initial time length can be adjusted based on the time length adjustment amount Jitter_Adjustment, for example, the initial time length of the scheduling cycle is lengthened, that is, ticks counted by the timer are increased. If the Jitter_Adjustment adjusted each time is +1000 where "+" represents incremental adjustment is performed on the initial time length, when the initial time length corresponds to 30000 ticks, the target time length will correspond to 31000 ticks after incremental adjustment.

In some examples, based on Jitter_Adjustment, C and TsNum, the total adjustment number Adjust_Counter of the scheduling cycles is determined in the following manner: Adjust_Counter=C*TsNum/|Jitter_Adjustment|= 30000*2/1000= 60. To sum up, each scheduling cycle may be adjusted from the initial time length 30us to the target time length (30us+1us). Over 60 adjustments, a total adjustment time length is 31us*60=1.86ms. The adjustment process of the scheduling cycles is extended to 1.86ms, and each scheduling cycle can be increased by 1000ns, which is almost unperceivable macroscopically. Therefore, the packet jitter resulting from change of the scheduling cycles can be negligible.

By the above adjustment process of the scheduling cycles, when the packet sent by the second network device in the scheduling cycle a0 reaches the first network device, the reception scheduling cycle of the first network device can be adjusted to be near the reference point Anchor (target scheduling cycle), so as to maintain the reasonable jitter range.

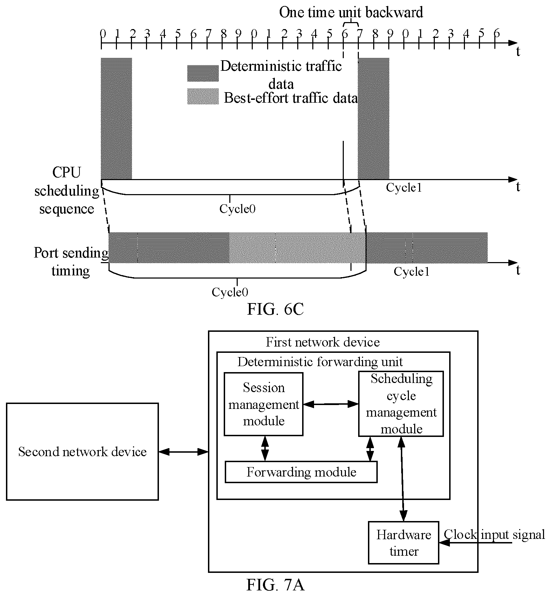

The validity and constraint of the adjustment process of the scheduling cycles are analyzed below. FIG. 6A is a schematic diagram of normal scheduling cycles, where the sending time of the CPU for deterministic traffic scheduling only occupies 2 time units, each sending scheduling cycle occupies 16 time units, the sending time of the deterministic traffic at the port occupies 8 time units, and the sending time of the best-effort traffic at the port occupies 8 time units. FIG. 6B is a schematic diagram in which the scheduling cycle is adjusted forward by one time unit, where the forward adjustment is equivalent to shortening the length of the scheduling cycle, that is, reducing the packets of the deterministic traffic forwarded in the scheduling cycle. Functionally, the case that the packets of the deterministic traffic are not completely sent in the scheduling cycle will not occur for the following reasons: the adjustment amount of each scheduling cycle is very small; in order to guarantee deterministic forwarding, there will be a margin for the deterministic traffic allocated to each scheduling cycle; due to introduction of adjustment, the accumulated error will not accumulate unidirectionally. FIG. 6C is a schematic diagram in which the scheduling cycle is adjusted backward by one time unit, where the backward adjustment is equivalent to increasing the length of the scheduling cycle, that is, increasing the packets of the deterministic traffic forwarded in the scheduling cycle. Functionally, the case that the packets of the deterministic traffic are not completely sent in the scheduling cycle will not occur. In conclusion, neither the forward adjustment nor the backward adjustment affects the function of cyclical scheduling and forwarding.

In an example, the second network device is an upstream node and the first network device is a downstream node. For example, the second network device sends a test packet to the first network device. The second network device sends a test packet in a particular cycle, for example, the second network device fixedly sends the test packet in the scheduling cycle a0. That is, in each scheduling cycle a0, the test packet is sent to the first network device.

After receiving the test packet, the first network device determines the sending scheduling cycle of the test packet on the second network device is the scheduling cycle a0. The first network device determines the target scheduling cycle corresponding to the scheduling cycle a0 on the present device, which is denoted as Anchor. For example, the target scheduling cycle is the scheduling cycle b3. The first network device may also determine the reception scheduling cycle of the test packet on the present device, which is denoted as Current.

Furthermore, the Current and the Anchor may be compared. If the current goes beyond the reasonable jitter range of the Anchor, it is determined that the initial time length of the scheduling cycle is to be adjusted; if the Current does not go beyond the reasonable jitter range of the Anchor, it is determined that the initial time length of the scheduling cycle is not to be adjusted.

For example, if the number of the scheduling cycles is d (d>7), there are a total number d of CQs, where d number of scheduling cycles are in one-to-one correspondence with d number of CQs, the target scheduling cycle is Anchor, the reasonable jitter range includes three scheduling cycles and the reception scheduling cycle is Current. On this basis, the adjustment direction (incremental adjustment or decremental adjustment is performed on the initial time length) and the adjustment amount (the number of the interval cycles TsNum between the reception scheduling cycle and the target scheduling cycle) of the initial time length can be determined in the following steps.

At step S11, an adjusted cycle number is calculated in the formula: $Adjust = \left(Current+d-Anchor\right) mod d .$

At step S12, if the Adjust is greater than d/2, it is determined that the adjustment direction of the initial time length is forward adjustment and the adjustment amount is (d-Adjust) scheduling cycles; if the Adjust is not greater than d/2, it is determined that the adjustment direction of the initial time length is backward adjustment and the adjustment amount is Adjust number of scheduling cycles.

The forward adjustment represents the initial time length of the scheduling cycle is reduced, the adjustment amount is (d-Adjust) number of scheduling cycles, and the number of the interval cycles TsNum is d-Adjust. The backward adjustment represents the initial time length of the scheduling cycle is increased, the adjustment amount is Adjust number of scheduling cycles, and the number of the interval cycles TsNum is Adjust.

At step S13, the value of the time length adjustment amount Jitter_Adjustment is set, where the absolute value of the Jitter_Adjustment may be globally set, for example, to 1000 or the like. The positiveness and negativeness of the Jitter_Adjustment may be determined based on adjustment direction. For example, if the adjustment direction of the initial time length is the forward adjustment, it is required to reduce the initial time length of the scheduling cycle, and the Jitter_Adjustment is negative denoted as "-"; if the adjustment direction of the initial time length is the backward adjustment, it is required to increase the initial time length of the scheduling cycle and the Jitter_Adjustment is positive denoted as "+".

At step S14, the total adjustment number Adjust_Counter of the scheduling cycles is determined based on the number of the interval cycles TsNum and the time length adjustment amount Jitter_Adjustment. The specific determination manner may be referred to the above example, and will not be repeated herein.

In an example, in order to support adjustment functions of the scheduling cycles on the above deterministic network, the following structures and functions of the network devices (in this embodiment, the structure and function of the first network device are taken as an example, and the structure and function of other network devices are similar.) may be adopted in this embodiment.

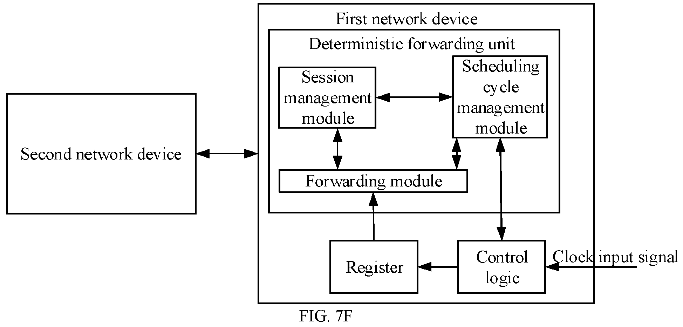

In a first manner, as shown in FIG. 7A, the first network device may include a hardware timer and a deterministic forwarding unit. The deterministic forwarding unit may include a forwarding module, a session management module and a scheduling cycle management module. In this manner, the hardware timer is configured to receive a clock input signal and determine a clock signal accumulation number based on the clock input signal; and when the clock signal accumulated number reaches the second clock count number corresponding to the target time length, generate a trigger signal. The generation time of the trigger signal is taken as the ending time of the current scheduling cycle, and the generation time of the trigger signal is taken as the start time of a next scheduling cycle of the current scheduling cycle. An interval between two adjacent trigger signals generated by the hardware timer is the target time length.

1. Session management module: The session management module is configured to establish a session with the second network device. The function of the session is that the second network device periodically sends a test packet to the first network device via the session, where the sending cycle T of the test packet is set based on error accumulation speed, which is not limited herein. The adjustment process of the scheduling cycle of the deterministic network is triggered by the test packet. In practical applications, the adjustment process of the scheduling cycle of the deterministic network may also be triggered by a data packet belonging to the deterministic traffic.

The session management module may receive scheduling cycle information from the forwarding module, where the scheduling cycle information may include, without limitation, Temp_CSQF_Jiffies at the time of receiving the test packet by the forwarding module, node identifier, and CSQF parameters. Temp_CSQF_Jiffies represents a value of a global count (CSQF _Jiffies) of the scheduling cycle, which is used to determine a current scheduling cycle of the first network device. For example, when Temp_CSQF_Jiffies is 1, it represents the first scheduling cycle, for example, the scheduling cycle b0; when Temp_CSQF_Jiffies is 2, it represents the second scheduling cycle, for example, the scheduling cycle b1, and so on. The node identifier represents a node identifier of the second network device. The CSQF parameters may include egress interface information, i.e. the egress interface information corresponding to the test packet.

The session management module may maintain a session information table which includes but not limited to: a mapping relationship of UpNodeId, InterfaceId and Anchor. The UpNodeId represents the node identifier of the second network device which can be set manually by a user or a unique identifier of the device, for example, IP address or the like as long as it is unique. The InterfaceId represents an interface identifier of the first network device, which can be manually set by a user.

Anchor represents an identifier of the scheduling cycle, which is used to represent an associated scheduling cycle corresponding to the specified scheduling cycle of the second network device. That is, after a packet sent by the second network device in the specified scheduling cycle reaches the first network device, the packet should be stored into the CQ corresponding to the associated scheduling cycle.

The mapping relationship between the specified scheduling cycle and the associated scheduling cycle is a mapping relationship between the scheduling cycle of the second network deice and the scheduling cycle of the first network device. This mapping relationship can be pre-configured or determined based on an algorithm. Thus, the manner of acquiring the mapping relationship is not limited herein.

In this embodiment, it is assumed that the specified scheduling cycle of the second network device is the scheduling cycle a0 and the associated scheduling cycle of the first network device is the scheduling cycle b3. In this case, Anchor in the session information table represents the identifier of the scheduling cycle b3, that is, the scheduling cycle b3 can be obtained by using the value of Anchor.

After receiving the scheduling cycle information from the forwarding module, the session management module may query the session information table with the node identifier and the egress interface information as index to obtain the value of the Anchor, and based on the value of the Anchor, determine the associated scheduling cycle. If the Anchor represents the identifier of the scheduling cycle b3, it is determined that the associated scheduling cycle is the scheduling cycle b3 which corresponds to the scheduling cycle a0 of the second network device.

Based on the sending scheduling cycle of the second network device, the specified scheduling cycle of the second network device and the associated scheduling cycle of the first network device, the target scheduling cycle corresponding to the sending scheduling cycle on the first network device may be determined. For example, the number of the interval cycles between the sending scheduling cycle and the specified scheduling cycle may be equal to the number of the interval cycles between the target scheduling cycle and the associated scheduling cycle. For example, if the sending scheduling cycle of the second network device is the scheduling cycle a0, namely, the test packet is sent in the scheduling cycle a0, it indicates that the sending scheduling cycle and the specified scheduling cycle of the second network device are same. Therefore, it is determined that the target scheduling cycle and the associated scheduling cycle of the first network device are same, that is, the target scheduling cycle is the scheduling cycle b3.

To sum up, the session management module may determine the target scheduling cycle, for example, the scheduling cycle b3.

After receiving the scheduling cycle information from the forwarding module, the session management module may also, based on Temp_CSQF_Jiffies in the scheduling cycle information, determine the reception sending cycle of the first network device and denote the reception scheduling cycle as Current which represents that the first network device receives the test packet in the reception scheduling cycle.

Based on the target scheduling cycle Anchor and the reception scheduling cycle Current, the session management module determines the adjusted cycle number Adjust, the adjustment direction, the number of the interval cycles TsNum, the time length adjustment amount Jitter_Adjustment, the total adjustment number Adjust_Counter and the like in the steps S11 to S14, which will not be repeated herein.

2. Hardware timer: The hardware timer is a high precision hardware timer inside a CPU which can generate a trigger signal based on configuration parameters. The input of the hardware timer is the clock input signal of the system clock. If the frequency of the system clock is 1G, namely, each tick is 1ns, which represents one clock input signal is generated every other 1ns, the hardware timer can receive one clock input signal every other 1ns, and based on the clock input signal, determine the clock signal accumulation number, that is, increase the clock signal accumulation number by 1 upon receiving the clock input signal each time.

The scheduling cycle management module may distribute the configuration parameters (e.g. count value) to the hardware timer. When the actual time length of the scheduling cycle is the initial time length, the first clock count number corresponding to the initial time length is taken as the count value. For example, the first clock count number is 30000. In this case, each time the clock signal accumulation number reaches the first clock count number, the hardware timer may generate a trigger signal and output the trigger signal to the scheduling cycle management module. Since the trigger signal is generated based on the first clock count number, an interval between two adjacent trigger signals is matched with the first clock count number, that is, the interval between two adjacent trigger signals is the initial time length. Furthermore, when the actual time length of the scheduling cycle is the target time length, the second clock count number corresponding to the target time length is taken as the count value, for example, the second clock count number is 29000 or 31000. In this case, each time the clock signal accumulation number reaches the second clock count number, the hardware timer may generate a trigger signal and output the trigger signal to the scheduling cycle management module. Since the trigger signal is generated based on the second clock count number, an interval between two adjacent trigger signals is the target time length.

In some examples, for the trigger signal generated by the hardware timer, the generation time of the trigger signal is taken as the ending time of the current scheduling cycle, and the generation time of the trigger signal is also taken as the start time of a next scheduling cycle of the current scheduling cycle. The trigger signal may be an interruption signal or another type of signal, which is not limited herein, as long as the trigger signal can be used to determine the start time and the ending time of the scheduling cycle.

3. Forwarding module: The forwarding module is configured to receive a test packet from the second network device, and acquire the node identifier of the second network device and the CSQF parameters (e.g. egress interface information corresponding to the test packet or the like) from the test packet, and further acquire Temp_CSQF_Jiffies from the scheduling cycle management module and then generate scheduling cycle information based on the node identifier, the CSQF parameters and the Temp_CSQF_Jiffies, and then send the scheduling cycle information to the session management module. Next, the session management module determines, based on the scheduling cycle information, the parameters such as Adjust_Counter and Jitter_Adjustment. The specific process can be referred to relevant functions of the session management module.

4. Scheduling cycle management module: The scheduling cycle management module is configured to receive the trigger signal generated by the hardware timer, and update Temp_CSQF_Jiffies each time the trigger signal is received. For example, in the first time that the trigger signal is received, Temp_CSQF_Jiffies is updated to 1 which represents the first scheduling cycle; in the second time that the trigger signal is received, Temp_CSQF_Jiffies is updated to 2 which represents the second scheduling cycle, and so on.

The scheduling cycle management module may acquire the parameters such as Jitter_Adjustment and Adjust_Counter from the session management module, and based on Jitter_Adjustment and Adjust_Counter, determine the configuration parameters (e.g. count value), and then distribute the count value to the hardware timer so as to adjust the count value of the hardware timer.

For example, if the first clock count number corresponding to the initial time length is 30000, when the actual time length of the scheduling cycle is the initial time length, the scheduling cycle management module distributes the count value 30000 to the hardware timer.

After the actual time length of the scheduling cycle is updated to the target time length, if Jitter_Adjustment is "+1000", the scheduling cycle management module distributes the count value 31000 to the hardware timer; if Jitter_Adjustment is "-1000", the scheduling cycle management module distributes the count value 29000 to the hardware timer.

After the updated count value 31000 or 29000 is distributed to the hardware timer, if Adjust_Counter is 60, the scheduling cycle management module receives 60 trigger signals continuously and then the actual time length of the scheduling cycle is updated to the initial time length and the scheduling cycle management module re-distributes the count value 30000 to the hardware timer until the actual time length of the scheduling cycle is updated next time.

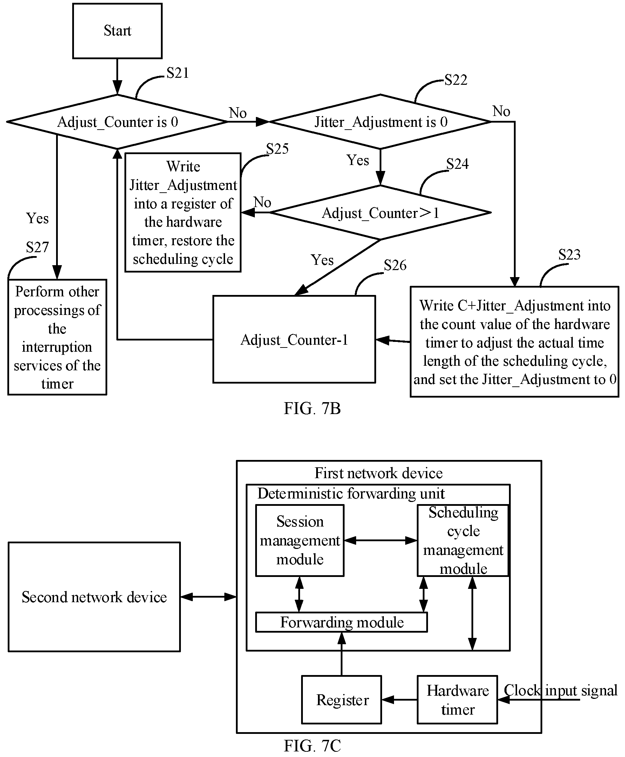

In some examples, the adjustment process of the count value can be performed in the following steps as shown in FIG. 7B.

At step S21, if Adjust_Counter is 0, step S27 is performed and otherwise, step S22 is performed.

At step S22, if Jitter_Adjustment is 0, step S24 is performed and otherwise step S23 is performed.

At step S23, C+Jitter_Adjustment is written into the count value of the hardware timer to adjust the actual time length of the scheduling cycle, that is, the actual time length of the scheduling cycle is updated from the initial time length to the target time length. It is noted that the Jitter_Adjustment herein may be a positive value or a negative value. After C+Jitter_Adjustment is written into the count value of the hardware timer, the Jitter_Adjustment may be set to 0 and step S26 is performed.

Based on actual situations, the adjustment process of the scheduling cycle can be extended to a plurality of scheduling cycles rather than used only for one scheduling cycle. Hence, after the first scheduling cycle is adjusted, the scheduling cycle will not be restored immediately. After the Jitter_Adjustment is set to 0, step S26 is performed instead of step S24.

At step S24, if Adjust_Counter is greater than 1, step S26 is performed and otherwise step S25 is performed.

At step S25, Jitter_Adjustment is written into a register of the hardware timer, the scheduling cycle is restored by performing step S26, namely, the actual time length is restored to the initial time length, and C is written into the count value of the hardware timer.

At step S26, Adjust_Counter is decreased by 1 and step S21 is repeated.

At step S27, other processings of the interruption services of the timer are performed.

In a second manner, as shown in FIG. 7C, the first network device may include a hardware module (with the hardware timer as hardware module) and a deterministic forwarding unit. The deterministic forwarding unit includes a forwarding module, a session management module and a scheduling cycle management module. The hardware module may include a register and can be configured to receive a clock input signal. Each time the clock input signal is received, the hardware module determines a clock signal accumulation number based on the clock input signal, and stores the clock signal accumulation number in the register of the hardware module. When the current scheduling cycle starts, the forwarding module, based on the second clock count number corresponding to the target time length, determines a clock signal target number of the current scheduling cycle; the forwarding module queries for the clock signal accumulation number in the register; if the obtained clock signal accumulation number reaches the clock signal target number, determines the current scheduling cycle is ended and updates a next scheduling cycle of the current scheduling cycle to the current scheduling cycle.
1. Hardware timer: The input of the hardware timer is the clock input signal of the system clock. If the frequency of the system clock is 1G, the hardware timer can receive one clock input signal every other 1ns. When receiving the clock input signal each time, the hardware timer determines the clock signal accumulation number based on the clock input signal, that is, increases the clock signal accumulation number by 1 upon receiving the clock input signal each time. Each time the clock input signal is received, the clock signal accumulation number can be stored in the register of the hardware timer.
   Compared with the first manner, in the second manner, the hardware timer only stores the clock signal accumulation number in the register rather than generates and outputs a trigger signal to the scheduling cycle management module, and the scheduling cycle management module also does not require to distribute the configuration parameters (e.g. count value) to the hardware timer.
2. Session management module: The session management module receives the scheduling cycle information from the forwarding module, where the scheduling cycle information includes but not limited to: Temp_CSQF_Jiffies, node identifier, and CSQF parameters. The session management module queries the session information table based on the scheduling cycle information to obtain an associated scheduling cycle and determine a target scheduling cycle. The session management module determines a reception scheduling cycle based on Temp_CSQF_Jiffies. Based on the target scheduling cycle and the reception scheduling cycle, the parameters such as the adjusted cycle number Adjust, the adjustment direction, the number of the interval cycles TsNum, the time length adjustment amount Jitter_Adjustment, and the total adjustment number Adjust_Counter and the like are determined.
3. Forwarding module: The forwarding module is configured to receive a test packet from the second network device, and acquire the node identifier of the second network device and the CSQF parameters from the test packet, and further acquire Temp_CSQF_Jiffies from the scheduling cycle management module, and then generate scheduling cycle information based on the node identifier, the CSQF parameters and Temp_CSQF_Jiffies, and then send the scheduling cycle information to the session management module.

For the current scheduling cycle, when the current scheduling cycle starts, if a clock signal initial number is x (representing the clock signal accumulation number stored in the register of the hardware timer is x), the forwarding module can determine the clock signal target number of the current scheduling cycle. For example, when the actual time length of the scheduling cycle is the initial time length, the forwarding module determines the first clock count number corresponding to the initial time length, for example, 30000, and takes a sum of the initial number x and the first clock count number as the clock signal target number of the current scheduling cycle. When the actual time length of the scheduling cycle is updated to the target time length, the forwarding module determines the second clock count number corresponding to the target time length, for example, 29000 or 31000, and takes a sum of the initial number x and the second clock count number as the clock signal target number of the current scheduling cycle.

Based on the clock signal target number of the current scheduling cycle, the forwarding module queries for the clock signal accumulation number in the register of the hardware timer; if the obtained clock signal accumulation number does not reach the clock signal target number, maintains the current scheduling cycle; if the obtained clock signal accumulation number reaches the clock signal target number, determines the current scheduling cycle is ended, and takes a next scheduling cycle of the current scheduling cycle as the current scheduling cycle and the clock signal target number as the clock signal initial number x of the scheduling cycle.

The scheduling cycle management module may distribute the configuration parameters to the forwarding module, for example, distribute the first clock count number corresponding to the initial time length or the second clock count number corresponding to the target time length to the forwarding module, and the forwarding module then determines the clock signal target number of the current scheduling cycle based on the configuration parameters.

The forwarding module may, when determining the clock signal accumulation number reaches the clock signal target number, generate a trigger signal and output the trigger signal to the scheduling cycle management module. For the trigger signal generated by the forwarding module, the generation time of the trigger signal is taken as the ending time of the current scheduling cycle, and the generation time of the trigger signal is also taken as the start time of a next scheduling cycle of the current scheduling cycle.

4. Scheduling cycle management module: The scheduling cycle management module is configured to receive the trigger signal generated by the forwarding module, and update Temp_CSQF_Jiffies upon receiving the trigger signal each time. The scheduling cycle management module acquires the parameters such as Jitter_Adjustment and Adjust_Counter from the session management module and based on Jitter_Adjustment and Adjust_Counter, determines the configuration parameters and then distributes the configuration parameters to the forwarding module. The implementation manner of the scheduling cycle management module can be referred to the first manner and will not be repeated herein.

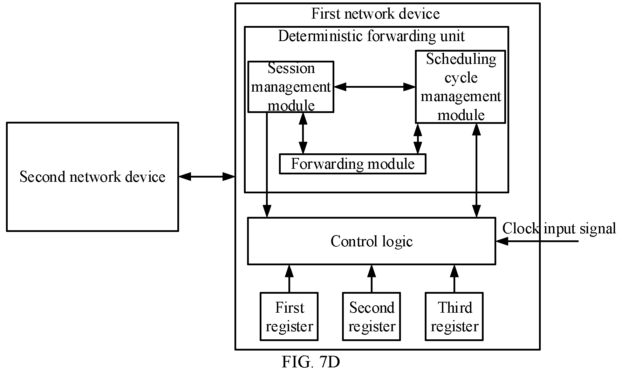

In a third manner, as shown in FIG. 7D, the first network device may include a cycle adjusting unit and a deterministic forwarding unit. The deterministic forwarding unit may include a forwarding unit, a session management module and a scheduling cycle management module. The cycle adjusting unit may include a control logic (e.g. FPGA, CPLD, ASIC), a first register, a second register and a third register. The control logic is configured to receive the clock input signal, the first register is configured to store the first clock count number corresponding to the initial time length, the second register is configured to store the time length adjustment amount Jitter_Adjustment, and the third register is configured to store the total adjustment number Adjust_Counter of the scheduling cycles. The most significant bit of the second register may be a sign bit, 1 represents "-" and 0 represents "+", whereas the remaining bits other than the most significant bit of the second register represent |Jitter_Adjustment|.

In this manner, the control logic, based on the first clock count number and the time length adjustment amount, determines the second clock count number corresponding to the target time length; based on the clock input signal, determines the clock signal accumulation number; when the clock signal accumulation number reaches the second clock count number, generates a trigger signal. The generation time of the trigger signal is taken as the ending time of the current scheduling cycle, and the generation time of the trigger signal is also taken as the start time of a next scheduling cycle of the current scheduling cycle. After generating Adjust_Counter number of trigger signals based on the second clock count number, the control logic continues determining the clock signal accumulation number based on the clock input signal, and when the clock signal accumulation number reaches the first clock count number corresponding to the initial time length, generates a trigger signal.
1. Session management module: the session management module receives the scheduling cycle information from the forwarding module, where the scheduling cycle information includes but not limited to: Temp_CSQF_Jiffies, node identifier and CSQF parameters. The session management module queries the session information table based on the scheduling cycle information to obtain an associated scheduling cycle and determine a target scheduling cycle. The session management module determines a reception scheduling cycle based on Temp_CSQF_Jiffies. Based on the target scheduling cycle and the reception scheduling cycle, the parameters such as the adjusted cycle number Adjust, the adjustment direction, the number of the interval cycles TsNum, the time length adjustment amount Jitter_Adjustment, and the total adjustment number Adjust_Counter and the like are determined.
   In some examples, the session management module can write Jitter_Adjustment into the second register of the cycle adjusting unit, and write Adjust_Counter into the third register of the cycle adjusting unit.
2. Forwarding module: the forwarding module is configured to: receive a test packet from the second network device, and acquire the node identifier of the second network device and the CSQF parameters from the test packet, and further acquire Temp_CSQF_Jiffies from the scheduling cycle management module, and then generate scheduling cycle information based on the node identifier, the CSQF parameters and Temp_CSQF_Jiffies, and then send the scheduling cycle information to the session management module.
3. Scheduling cycle management module: the scheduling cycle management module is configured to receive a trigger signal generated by the control logic, and update Temp_CSQF_Jiffies upon receiving the trigger signal each time. The scheduling cycle management module determines the first clock count number corresponding to the initial time length and writes the first clock count number into the first register.
4. Control logic: the input of the control logic is the clock input signal of the system clock. If the frequency of the system clock is 1G, one clock input signal is received every other 1ns, and further, based on the clock input signal, the clock signal accumulation number is determined. When the clock input signal is received each time, the clock signal accumulation number will be increased by 1.

In an initial state, the actual time length of the scheduling cycle is the initial time length, and the first register stores the first clock count number, and the second and third registers are empty. Based on this, each time the clock signal accumulation number reaches the first clock count number, the control logic will generate a trigger signal and output the trigger signal to the scheduling cycle management module. An interval between two adjacent trigger signals generated by the control logic is the initial time length.

When the actual time length of the scheduling cycle is updated to the target time length, the session management module writes Adjust_Counter into the third register, and writes Jitter_Adjustment into the second register. The control logic, after detecting that data is written into the second and third registers, reads the first clock count number from the first register and reads Jitter_Adjustment from the second register, and based on the first clock count number and the Jitter_Adjustment, determines the second clock count number corresponding to the target time length. Based on this, each time the clock signal accumulation number reaches the second clock count number, the control logic will generate a trigger signal, and output the trigger signal to the scheduling cycle management module. An interval between two adjacent trigger signals generated by the control logic is the target time length.

In some examples, for the trigger signal generated by the control logic, the generation time of the trigger signal is taken as the ending time of the current scheduling cycle, and the generation time of the trigger signal is also taken as the start time of a next scheduling cycle of the current scheduling cycle. The trigger signal may be an interruption signal or another type of signal, which is not limited herein, as long as the trigger signal can be used to determine the start time and the ending time of the scheduling cycle.

In some examples, the control logic may read Adjust_Counter from the third register, and based on the second clock count number, generate Adjust_Counter number of trigger signals, and then actual time length of the scheduling cycle is updated to the initial time length, namely, the target time length is restored to the initial time length. Hence, the control logic reads the first clock count number from the first register, and based on the first clock count number, generates a trigger signal, for example, each time the clock signal accumulation number reaches the first clock count number, the control logic will generate a trigger signal, and output the trigger signal to the scheduling cycle management module. An interval between two adjacent trigger signals is the initial time length.

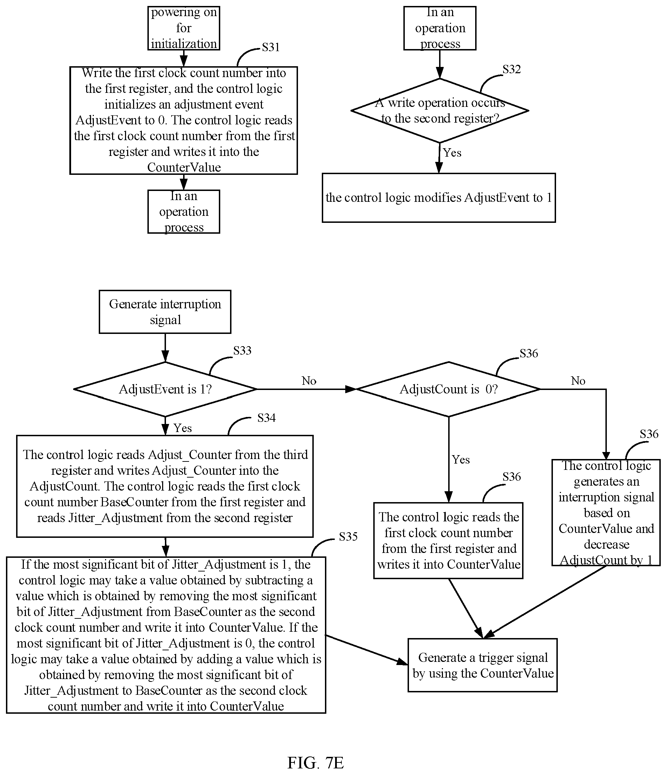

In some examples, as shown in FIG. 7E, the processing flow of the control logic may include the following steps.

At step S31, after powering on for initialization, the first clock count number is written into the first register, and the control logic initializes an adjustment event AdjustEvent to 0. The control logic reads the first clock count number from the first register and writes it into the CounterValue which is used to generate a trigger signal. The trigger signal may be an interruption signal, or another type of signal. Subsequent descriptions are made with the interruption signal as an example.

At step S32, in an operation process, the control logic determines whether a write operation occurs to the second register. If there is no such write operation, determination on whether a write operation occurs to the second register is continued and so on. If there is such a write operation, the control logic modifies AdjustEvent to 1. The session management module may write Jitter_Adjustment into the second register, and write Adjust_Counter into the third register. Thus, the control logic can detect a write operation for the second register. The session management module may firstly perform write operation on the second register and after completing the write operation for the second register, perform write operation on the third register.

At step S33, the control logic, when generating an interruption signal, determines whether AdjustEvent is 1. If AdjustEvent is 1, the AdjustEvent is set to 0, and step S34 is performed; if AdjustEvent is not 1, step S36 is performed.

At step S34, the control logic reads Adjust_Counter from the third register and writes Adjust_Counter into the AdjustCount (adjustment number). The control logic reads the first clock count number BaseCounter from the first register and reads Jitter_Adjustment from the second register, and performs step S35.

At step S35, if the most significant bit of Jitter_Adjustment is 1, the control logic may take a value obtained by subtracting a value which is obtained by removing the most significant bit of Jitter_Adjustment from BaseCounter as the second clock count number and write it into CounterValue. If the most significant bit of Jitter_Adjustment is 0, the control logic may take a value obtained by adding a value which is obtained by removing the most significant bit of Jitter_Adjustment to BaseCounter as the second clock count number and write it into CounterValue.

At step S36, if AdjustCount is not 0, the control logic may, based on CounterValue, generate an interruption signal (an interruption signal generated when the clock signal accumulation number reaches a number in CounterValue), and decrease AdjustCount by 1. If AdjustCount is 0, the control logic reads the first clock count number from the first register and writes it into CounterValue and then uses the CounterValue to generate a trigger signal.

In a fourth manner, as shown in FIG. 7E, the first network device may include a hardware module (using the control logic as the hardware module) and a deterministic forwarding unit. The control logic may include a register and is configured to receive a clock input signal. Each time the clock input signal is received, the control logic determines a clock signal accumulation number based on the clock input signal, and stores the clock signal accumulation number in the register. The implementation of the fourth manner is similar to that of the second manner except that the hardware timer is replaced with the control logic. Therefore, no redundant descriptions are made herein.

It can be seen from the above technical solution that, in the embodiments of the present disclosure, packet transmission of the deterministic network is achieved based on Cycle Specified Queuing and Forwarding (CSQF), and the scheduling cycle of the deterministic network is dynamically controlled by adjusting the actual time length of the scheduling cycle of the deterministic network (from the initial time length to the target time length), such that the CSQF is independent of strict frequency synchronization and adaptive to change of link transmission latency. In this way, the adaptivity of the CSQF in a wide area network is greatly improved. By implementing the CSQF, the deterministic transmission capability is provided without affecting ongoing transmission services. By perceiving and quantizing an accumulated error of the cycle mapping between adjacent network devices, a mechanism is established to adjust the accumulated error in a smooth adjustment process. In this case, when the accumulated error reaches a specific threshold, the accumulate error is converted into an amount to be adjusted so as to achieve time length adjustment to a plurality of scheduling cycles in a smooth manner. When the amount to be adjusted is reached, the time length of the scheduling cycle is restored to the initial time length.

Based on the same application idea as the above method, an embodiment of the present disclosure provides a network device, which may include a processor and a machine readable storage medium. The machine readable storage medium stores machine executable instructions executable by the processor; the processor is configured to execute the machine executable instructions to perform the method of adjusting a scheduling cycle as mentioned in the above embodiments.

Based on the same application idea as the above method, an embodiment of the present disclosure, which is not claimed as such, further provides a machine readable storage medium. The machine readable storage medium stores several computer instructions which are executed by a processor to perform the method of adjusting a scheduling cycle as mentioned in the above embodiments.

The machine readable storage medium mentioned herein may be any of electronic, magnetic, optical or other physical storage devices and may contain or store information such as executable instructions, data and so on. For example, the machine readable storage medium may be a Radom Access Memory (RAM), a volatile or non-volatile memory, a flash memory, a storage drive (e.g. hard disk drive), a solid state harddisk, any type of storage disk (e.g., compact disk, Digital Video Disk (DVD)), or a similar storage medium, or a combination thereof.

The systems, apparatuses, modules or units described in the above embodiments may be specifically implemented by a computer chip or an entity or may be implemented by a product with a particular function. A typical implementing device may be a computer and the computer may be specifically a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

For convenience of description, the above apparatus is divided into different units based on functionality for descriptions. The functions of different units may be implemented in a same or a plurality of hardware and/or software when practicing the present disclosure.

The persons skilled in the art should understand that the examples of the present disclosure may be provided as a method, a system, or a computer program product. Thus, entire hardware examples, entire software examples or examples combining software and hardware may be adopted in the present disclosure. Further, the present disclosure may be implemented in the form of a computer program product that is operated on one or more computer available storage media (including but not limited to magnetic disk memory, CD-ROM, and optical memory and so on) including computer available program codes.

The present disclosure is described by referring to flowcharts and/or block diagrams of a method, a device (a system) and a computer program product in the embodiments of the present disclosure. It is understood that each flowchart and/or block in the flowcharts and/or the block diagrams or a combination of a flow chart and/or a block of the flowcharts and/or the block diagrams may be implemented by computer program instructions. These computer program instructions may be provided to a general-purpose computer, a dedicated computer, an embedded processor, or a processor of another programmable data processing device to generate a machine so that the instructions executable by a computer or a processor of another programmable data processing device generate an apparatus for implementing functions designated in one or more flows of the flowcharts and/or one or more blocks of the block diagrams.

Further, these computer program instructions may also be stored in a computer readable memory that can direct a computer or another programmable data processing device to work in a particular manner so that the instructions stored in the computer readable memory generate a product including an instruction apparatus and the instruction apparatus can implement functions designated in one or more flows of the flowcharts and/or one or more blocks of the block diagrams.

The computer program instructions may also be loaded on a computer or another programmable data processing device, so that a series of operation steps can be executed on the computer or another programmable device to generate processing achieved by the computer, and thus instructions executable on the computer or another programmable device are provided for steps for realizing functions designated in one or more flows of the flowcharts and/or one or more blocks of the block diagrams.

## Claims

1. A method of adjusting a scheduling cycle based on cycle specified queuing and forwarding, CSQF, applied to a first network device, and comprising:
after receiving a packet from a second network device, determining (401) a sending scheduling cycle of the packet on the second network device, and determining a reception scheduling cycle of the packet on the first network device;
determining (402) a target scheduling cycle corresponding to the sending scheduling cycle on the first network device, wherein the packet corresponds to a cycle queue, CQ, corresponding to the target scheduling cycle; and
if it is determined that an initial time length of the scheduling cycle is to be adjusted based on a number of interval cycles between the reception scheduling cycle and the target scheduling cycle, adjusting (403) an actual time length of the scheduling cycle on the first network device from the initial time length to a target time length.

2. The method of claim 1, wherein determining (402) the target scheduling cycle corresponding to the sending scheduling cycle on the first network device comprises:
acquiring a node identifier of the second network device and egress interface information corresponding to the packet;
based on the node identifier and the egress interface information, querying a configured session information table to obtain an associated scheduling cycle corresponding to a specified scheduling cycle of the second network device, wherein the session information table comprises a mapping relationship among node identifier, egress interface information and associated scheduling cycle; and
based on the sending scheduling cycle, the associated scheduling cycle and the specified scheduling cycle, determining the target scheduling cycle corresponding to the sending scheduling cycle on the first network device.

3. The method of claim 1, wherein
determining (403) that the initial time length of the scheduling cycle is to be adjusted based on the number of the interval cycles between the reception scheduling cycle and the target scheduling cycle comprises:
if the reception scheduling cycle is before the target scheduling cycle and the number of the interval cycles is greater than a first number threshold, determining that the initial time length of the scheduling cycle is to be adjusted;
if the reception scheduling cycle is after the target scheduling cycle and the number of the interval cycles is greater than a second number threshold, determining that the initial time length of the scheduling cycle is to be adjusted.

4. The method of claim 1, wherein adjusting (403) the actual time length of the scheduling cycle on the first network device from the initial time length to the target time length comprises:
if the reception scheduling cycle is before the target scheduling cycle, performing decremental adjustment on the initial time length based on a configured time length adjustment amount to obtain an adjusted target time length;
if the reception scheduling cycle is after the target scheduling cycle, performing incremental adjustment on the initial time length based on the time length adjustment amount to obtain an adjusted target time length.

5. The method of claim 1, wherein adjusting (403) the actual time length of the scheduling cycle on the first network device from the initial time length to the target time length comprises:
based on a first clock count number corresponding to the initial time length, the configured time length adjustment amount and the number of the interval cycles, determining a total adjustment number K of scheduling cycles, and updating actual time lengths of K continuous scheduling cycles on the first network device to the target time length;
after updating the actual time lengths of the K continuous scheduling cycles on the first network device to the target time length, the method further comprises: updating the actual time length of the scheduling cycle on the first network device from the target time length to the initial time length.

6. The method of any one of claims 1 to 5, wherein the first network device comprises a hardware timer configured to receive a clock input signal; adjusting the actual time length of the scheduling cycle on the first network device from the initial time length to the target time length comprises:
determining, by the hardware timer, a clock signal accumulation number based on the clock input signal; and
when the clock signal accumulation number reaches a second clock count number corresponding to the target time length, generating a trigger signal;
wherein a generation time of the trigger signal is taken as an ending time of a current scheduling cycle, and the generation time of the trigger signal is taken as a start time of a next scheduling cycle of the current scheduling cycle.

7. The method of any one of claims 1 to 5, wherein
the first network device comprises a control logic, a first register and a second register, the control logic is configured to receive a clock input signal, the first register is configured to store a first clock count number corresponding to the initial time length, and the second register is configured to store a configured time length adjustment amount; adjusting (403) the actual time length of the scheduling cycle on the first network device from the initial time length to the target time length comprises:
determining, by the control logic, a second clock count number corresponding to the target time length based on the first clock count number and the time length adjustment amount;
based on the clock input signal, determining a clock signal accumulation number; and
when the clock signal accumulation number reaches the second clock count number, generating a trigger signal;
wherein a generation time of the trigger signal is taken as an ending time of a current scheduling cycle, and the generation time of the trigger signal is taken as a start time of a next scheduling cycle of the current scheduling cycle.

8. The method of claim 7, wherein the first network device comprises a third register configured to store a total adjustment number K of scheduling cycles, and the method further comprises:
after the control logic generates K trigger signals based on the second clock count number, continuing determining the clock signal accumulation number based on the clock input signal, and when the clock signal accumulation number reaches the first clock count number corresponding to the initial time length, generating a trigger signal.

9. The method of any one of claims 1 to 5, wherein the first network device comprises a hardware module and a forwarding module, the hardware module is configured to receive a clock input signal; adjusting (403) the actual time length of the scheduling cycle on the first network device from the initial time length to the target time length comprises:
each time the hardware module receives the clock input signal, determining a clock signal accumulation number based on the clock input signal, and storing the clock signal accumulation number by a register of the hardware module;
at a start time of the current scheduling cycle, determining, by the forwarding module, a clock signal target number of the current scheduling cycle based on the second clock count number corresponding to the target time length;
querying for, by the forwarding module, the clock signal accumulation number in the register; if the obtained clock signal accumulation number reaches the clock signal target number, determining the current scheduling cycle is ended, and updating a next scheduling cycle of the current scheduling cycle to the current scheduling cycle.

10. The method of any one of claims 1 to 5, wherein the packet is a test packet or a data packet belonging to a deterministic traffic; if the packet is a data packet, the method further comprises:
storing the data packet into a cyclic queue, CQ, corresponding to the target scheduling cycle; and
within the target scheduling cycle, sending the data packet in the CQ corresponding to the target scheduling cycle to an external device.

11. A network device, comprising: a processor and a machine readable storage medium wherein the machine readable storage medium stores machine executable instructions executable by the processor; the processor is configured to execute the machine executable instructions to perform the method of any one of claims 1 to 10.

## Patentansprüche

1. Verfahren zum Anpassen eines Zeitplanungszyklus basierend auf Cycle Specified Queuing and Forwarding (CSQF), das auf eine erste Netzwerkvorrichtung angewendet wird, und umfassend:
nach dem Empfang eines Pakets von einer zweiten Netzwerkvorrichtung Bestimmen (401) eines Sende-Zeitplanungszyklus des Pakets auf der zweiten Netzwerkvorrichtung und Bestimmen eines Empfangs-Zeitplanungszyklus des Pakets auf der ersten Netzwerkvorrichtung;
Bestimmen (402) eines Ziel-Zeitplanungszyklus entsprechend dem Sende-Zeitplanungszyklus auf der ersten Netzwerkvorrichtung, wobei das Paket einer Cycle Queue (CQ) entsprechend dem Ziel-Zeitplanungszyklus, entspricht; und
wenn bestimmt wird, dass eine Anfangszeitlänge des Zeitplanungszyklus basierend auf einer Zahl von Intervallzyklen zwischen dem Empfangs-Zeitplanungszyklus und dem Ziel-Zeitplanungszyklus anzupassen ist, Anpassen (403) einer tatsächlichen Zeitlänge des Zeitplanungszyklus auf der ersten Netzwerkvorrichtung von der Anfangszeitlänge zu einer Zielzeitlänge.

2. Verfahren nach Anspruch 1, wobei das Bestimmen (402) des Ziel-Zeitplanungszyklus entsprechend dem Sende-Zeitplanungszyklus auf der ersten Netzwerkvorrichtung umfasst:
Erfassen eines Knotenidentifizierers der zweiten Netzwerkvorrichtung und von Ausgangsschnittstelleninformationen entsprechend dem Paket;
basierend auf dem Knotenidentifizierer und den Ausgangsschnittstelleninformationen Abfragen einer konfigurierten Sitzungsinformationstabelle zum Erhalten eines verbundenen Zeitplanungszyklus entsprechend einem festgelegten Zeitplanungszyklus der zweiten Netzwerkvorrichtung, wobei die Sitzungsinformationstabelle eine Zuordnungsbeziehung zwischen Knotenidentifizierer, Ausgangsschnittstelleninformationen und verbundenem Zeitplanungszyklus umfasst; und
basierend auf dem Sende-Zeitplanungszyklus, dem verbundenen Zeitplanungszyklus und dem festgelegten Zeitplanungszyklus Bestimmen des Ziel-Zeitplanungszyklus entsprechend dem Sende-Zeitplanungszyklus auf der ersten Netzwerkvorrichtung.

3. Verfahren nach Anspruch 1, wobei
das Bestimmen (403), dass die Anfangszeitlänge des Zeitplanungszyklus basierend auf der Zahl der Intervallzyklen zwischen dem Empfangs-Zeitplanungszyklus und dem Ziel-Zeitplanungszyklus anzupassen ist, umfasst:
wenn der Empfangs-Zeitplanungszyklus vor dem Ziel-zeitplanungszyklus liegt und die Zahl der Intervallzyklen größer ist als eine erste Zahlschwelle, Bestimmen, dass die Anfangszeitlänge des Zeitplanungszyklus anzupassen ist;
wenn der Empfangs-Zeitplanungszyklus nach dem Ziel-Zeitplanungszyklus liegt und die Zahl der Intervallzyklen größer ist als eine zweite Zahlschwelle, Bestimmen, dass die Anfangszeitlänge des Zeitplanungszyklus anzupassen ist.

4. Verfahren nach Anspruch 1, wobei das Anpassen (403) der tatsächlichen Zeitlänge des Zeitplanungszyklus auf der ersten Netzwerkvorrichtung von der Anfangszeitlänge zur Zielzeitlänge umfasst:
wenn der Empfangs-Zeitplanungszyklus vor dem Ziel-Zeitplanungszyklus liegt, Ausführen einer dekrementierenden Anpassung der Anfangszeitlänge basierend auf einem konfigurierten Zeitlängen-Anpassungsbetrag, um eine angepasste Zielzeitlänge zu erhalten;
wenn der Empfangs-Zeitplanungszyklus nach dem Ziel-Zeitplanungszyklus liegt, Ausführen einer inkrementierenden Anpassung der Anfangszeitlänge basierend auf dem Zeitlängen-Anpassungsbetrag, um eine angepasste Zielzeitlänge zu erhalten.

5. Verfahren nach Anspruch 1, wobei das Anpassen (403) der tatsächlichen Zeitlänge des Zeitplanungszyklus auf der ersten Netzwerkvorrichtung von der Anfangszeitlänge zur Zielzeitlänge umfasst:
basierend auf einer ersten Taktzählerzahl entsprechend der Anfangszeitlänge, dem konfigurierten Zeitlängenanpassungsbetrag und der Zahl der Intervallzyklen Bestimmen einer Gesamtanpassungszahl K von Zeitplanungszyklen und Aktualisieren von tatsächlichen Zeitlängen von K kontinuierlichen Zeitplanungszyklen auf der ersten Netzwerkvorrichtung zur Zielzeitlänge;
nach dem Aktualisieren der tatsächlichen Zeitlängen der K kontinuierlichen Zeitplanungszyklen auf der ersten Netzwerkvorrichtung zur Zielzeitlänge das Verfahren ferner umfasst: Aktualisieren der tatsächlichen Zeitlänge des Zeitplanungszyklus auf der ersten Netzwerkvorrichtung von der Zielzeitlänge zur Anfangszeitlänge.

6. Verfahren nach einem der Ansprüche 1 bis 5, wobei die erste Netzwerkvorrichtung einen Hardware-Zeitgeber, ausgebildet zum Empfangen eines Takteingabesignals; das Anpassen der tatsächlichen Zeitlänge des Zeitplanungszyklus auf der ersten Netzwerkvorrichtung von der Anfangszeitlänge zur Zielzeitlänge umfasst:
Bestimmen durch den Hardware-Zeitgeber einer Taktsignal-Sammelzahl basierend auf dem Takteingabesignal; und
wenn die Taktsignal-Sammelzahl eine zweite Taktzählerzahl entsprechend der Zielzeitlänge erreicht, Erzeugen eines Auslösersignals;
wobei eine Erzeugungszeit des Auslösersignals als eine Endzeit eines aktuellen Zeitplanungszyklus verwendet wird und die Erzeugungszeit des Auslösersignals als eine Anfangszeit eines nächsten Zeitplanungszyklus des aktuellen Zeitplanungszyklus verwendet wird.

7. Verfahren nach einem der Ansprüche 1 bis 5, wobei
die erste Netzwerkvorrichtung eine Steuerlogik, ein erstes Register und ein zweites Register umfasst, die Steuerlogik zum Empfangen eines Takteingabesignals ausgebildet ist, das erste Register zum Speichern einer ersten Taktzählerzahl entsprechend der Anfangszeitlänge ausgebildet ist, und das zweite Register zum Speichern eines konfigurierten Zeitlängenanpassungsbetrags ausgebildet ist; das Anpassen (403) der tatsächlichen Zeitlänge des Zeitplanungszyklus auf der ersten Netzwerkvorrichtung von der Anfangszeitlänge zur Zielzeitlänge umfasst:
Bestimmen, durch die Steuerlogik, einer zweiten Taktzählerzahl entsprechend der Zielzeitlänge basierend auf der ersten Taktzählerzahl und dem Zeitlängenanpassungsbetrag;
basierend auf dem Takteingabesignal Bestimmen einer Taktsignal-Sammelzahl; und
wenn die Taktsignal-Sammelzahl die zweite Taktzählerzahl erreicht, Erzeugen eines Auslösersignals;
wobei eine Erzeugungszeit des Auslösersignals als eine Endzeit eines aktuellen Zeitplanungszyklus verwendet wird und die Erzeugungszeit des Auslösersignals als eine Anfangszeit eines nächsten Zeitplanungszyklus des aktuellen Zeitplanungszyklus verwendet wird.

8. Verfahren nach Anspruch 7, wobei die erste Netzwerkvorrichtung ein drittes Register umfasst, das zum Speichern einer Gesamtanpassungszahl K von Zeitplanungszyklen ausgebildet ist, und das Verfahren ferner umfasst:
nachdem die Steuerlogik K Auslösersignale basierend auf der zweiten Taktzählersignal erzeugt, Fortfahren mit dem Bestimmen der Taktsignal-Sammelzahl basierend auf dem Takteingabesignal, und wenn die Taktsignal-Sammelzahl die erste Taktzählerzahl entsprechend der Anfangszeitlänge erreicht, Erzeugen eines Auslösersignals.

9. Verfahren nach einem der Ansprüche 1 bis 5, wobei die erste Netzwerkvorrichtung ein Hardwaremodul und ein Weiterleitungsmodul umfasst, wobei das Hardwaremodul zum Empfangen eines Takteingabesignals ausgebildet ist; das Anpassen (403) der tatsächlichen Zeitlänge des Zeitplanungszyklus auf der ersten Netzwerkvorrichtung von der Anfangszeitlänge zur Zielzeitlänge umfasst:
jedes Mal, wenn das Hardwaremodul das Takteingabesignal empfängt, Bestimmen einer Taktsignal-Sammelzahl basierend auf dem Takteingabesignal und Speichern der Taktsignal-Sammelzahl durch ein Register des Hardwaremoduls;
zu einer Startzeit des aktuellen Zeitplanungszyklus, Bestimmen, durch das Weiterleitungsmodul, einer Taktsignal-Zielzahl des aktuellen Zeitplanungszyklus basierend auf der zweiten Taktzählerzahl entsprechend der Zielzeitlänge;
Abfragen, durch das Weiterleitungsmodul, nach der Taktsignal-Sammelzahl im Register; wenn die erhaltene Taktsignal-Sammelzahl die Taktsignal-Zielzahl erreicht, Bestimmen, dass der aktuelle Zeitplanungszyklus beendet ist, und Aktualisieren eines nächsten Zeitplanungszyklus des aktuellen Zeitplanungszyklus zum aktuellen Zeitplanungszyklus.

10. Verfahren nach einem der Ansprüche 1 bis 5, wobei das Paket ein Testpaket oder ein Datenpaket ist, das zu einem deterministischen Verkehr gehört; wenn das Paket ein Datenpaket ist, das Verfahren ferner umfasst:
Speichern des Datenpakets in einer Cyclic Queue (CQ) entsprechend dem Ziel-Zeitplanungszyklus; und
innerhalb des Ziel-Zeitplanungszyklus Senden des Datenpakets in der CQ entsprechend dem Ziel-Zeitplanungszyklus an eine externe Vorrichtung.

11. Netzwerkvorrichtung, umfassend: einen Prozessor und ein maschinenlesbares Speichermedium, wobei das maschinenlesbare Speichermedium maschinenausführbare Anweisungen speichert, die vom Prozessor ausführbar sind; der Prozessor zum Ausführen der maschinenausführbaren Anweisungen zum Ausführen des Verfahrens nach einem der Ansprüche 1 bis 10 ausgebildet ist.

## Revendications

1. Procédé pour l'ajustement d'un cycle de planification sur la base de la mise en file d'attente et le transfert à cycle spécifié (CSQF), appliqué à un premier dispositif réseau, et comprenant :
après réception d'un paquet provenant d'un deuxième dispositif réseau, la détermination (401) d'un cycle de planification d'émission du paquet sur le deuxième dispositif réseau, et la détermination d'un cycle de planification de réception du paquet sur le premier dispositif réseau ;
la détermination (402) d'un cycle de planification cible correspondant au cycle de planification d'émission sur le premier dispositif réseau, dans lequel le paquet correspond à une file d'attente cyclique (CQ) correspondant au cycle de planification cible ; et
si l'on détermine qu'une durée initiale du cycle de planification doit être ajustée en fonction d'un nombre de cycles d'intervalle entre le cycle de planification de réception et le cycle de planification cible, l'ajustement (403) d'une durée réelle du cycle de planification sur le premier dispositif réseau, en faisant passer la durée initiale à une durée cible.

2. Procédé selon la revendication 1, dans lequel la détermination (402) du cycle de planification cible correspondant au cycle de planification d'émission sur le premier dispositif réseau comprend :
l'acquisition d'un identifiant de nœud du deuxième dispositif réseau et d'informations d'interface de sortie correspondant au paquet ;
sur la base de l'identifiant de nœud et des informations d'interface de sortie, interroger une table d'informations de session configurée afin d'obtenir un cycle de planification associé correspondant à un cycle de planification spécifié du deuxième dispositif réseau, dans lequel la table d'informations de session comprend une relation de mise en correspondance entre l'identifiant de nœud, les informations d'interface de sortie et le cycle de planification associé ; et
sur la base du cycle de planification d'émission, du cycle de planification associé et du cycle de planification spécifié, la détermination du cycle de planification cible correspondant au cycle de planification d'émission sur le premier dispositif réseau.

3. Procédé selon la revendication 1, dans lequel
la détermination (403) selon laquelle la durée initiale du cycle de planification doit être ajustée en fonction du nombre de cycles d'intervalle entre le cycle de planification de réception et le cycle de planification cible comprend :
si le cycle de planification de réception est antérieur au cycle de planification cible et que le nombre de cycles d'intervalle est supérieur à un premier seuil numérique, la détermination du fait que la durée initiale du cycle de planification doit être ajustée ;
si le cycle de planification de réception est postérieur au cycle de planification cible et que le nombre de cycles d'intervalle est supérieur à un deuxième seuil numérique, la détermination du fait que la durée initiale du cycle de planification doit être ajustée.

4. Procédé selon la revendication 1, dans lequel l'ajustement (403) de la durée réelle du cycle de planification sur le premier dispositif réseau, de la durée initiale à la durée cible, comprend :
si le cycle de planification de réception est antérieur au cycle de planification cible, le fait d'effectuer un ajustement décroissant de la durée initiale en fonction d'une valeur d'ajustement de durée configurée afin d'obtenir une durée cible ajustée ;
si le cycle de planification de réception est postérieur au cycle de planification cible, le fait d'effectuer un ajustement croissant de la durée initiale en fonction de la valeur d'ajustement de durée afin d'obtenir une durée cible ajustée.

5. Procédé selon la revendication 1, dans lequel l'ajustement (403) de la durée réelle du cycle de planification sur le premier dispositif réseau, de la durée initiale à la durée cible, comprend :
sur la base d'un premier nombre de comptage d'horloge correspondant à la durée initiale, de la valeur d'ajustement de durée configurée et du nombre de cycles d'intervalle, la détermination d'un nombre total d'ajustements de K cycles de planification, et la mise à jour des durées réelles de K cycles de planification consécutifs sur le premier dispositif réseau à la durée cible ;
après avoir mis à jour les durées réelles des K cycles de planification consécutifs sur le premier dispositif réseau à la durée cible, le procédé comprend en outre : la mise à jour de la durée réelle du cycle de planification sur le premier dispositif réseau, de la durée cible à la durée initiale.

6. Procédé selon l'une quelconque des revendications 1 à 5, dans lequel le premier dispositif réseau comprend une horloge matérielle configurée pour recevoir un signal d'entrée d'horloge ; l'ajustement de la durée réelle du cycle de planification sur le premier dispositif réseau, de la durée initiale à la durée cible, comprend :
la détermination, par l'horloge matérielle, d'un nombre d'accumulation de signaux d'horloge sur la base du signal d'entrée d'horloge ; et
lorsque le nombre d'accumulation de signaux d'horloge atteint un deuxième nombre de comptage d'horloge correspondant à la durée cible, la génération d'un signal de déclenchement ;
dans lequel l'instant de génération du signal de déclenchement est considéré comme l'instant de fin d'un cycle de planification en cours, et l'instant de génération du signal de déclenchement est considéré comme l'instant de début d'un cycle de planification suivant du cycle de planification en cours.

7. Procédé selon l'une quelconque des revendications 1 à 5, dans lequel
le premier dispositif réseau comprend une logique de commande, un premier registre et un deuxième registre, la logique de commande est configurée pour recevoir un signal d'entrée d'horloge, le premier registre est configuré pour stocker un premier nombre de comptage d'horloge correspondant à la durée initiale, et le deuxième registre est configuré pour stocker une valeur d'ajustement de la durée configurée ; l'ajustement (403) de la durée réelle du cycle de planification sur le premier dispositif réseau, de la durée initiale à la durée cible, comprend :
la détermination, par la logique de commande, d'un deuxième nombre de comptage d'horloge correspondant à la durée cible sur la base du premier nombre de comptage d'horloge et de la valeur d'ajustement de la durée ;
sur la base du signal d'entrée d'horloge, la détermination d'un nombre d'accumulation de signaux d'horloge ; et
lorsque le nombre d'accumulation de signaux d'horloge atteint le deuxième nombre de comptage d'horloge, la génération d'un signal de déclenchement ;
dans lequel un instant de génération du signal de déclenchement est considéré comme un instant de fin d'un cycle de planification en cours, et l'instant de génération du signal de déclenchement est considéré comme un instant de début d'un cycle de planification suivant du cycle de planification en cours.

8. Procédé selon la revendication 7, dans lequel le premier dispositif réseau comprend un troisième registre configuré pour stocker un nombre total d'ajustements de K cycles de planification, et le procédé comprend en outre :
après que la logique de commande a généré K signaux de déclenchement sur la base du deuxième nombre de comptage d'horloge, le fait de continuer la détermination du nombre d'accumulation de signaux d'horloge sur la base du signal d'entrée d'horloge, et lorsque le nombre d'accumulation de signaux d'horloge atteint le premier nombre de comptage d'horloge correspondant à la durée initiale, la génération d'un signal de déclenchement.

9. Procédé selon l'une quelconque des revendications 1 à 5, dans lequel le premier dispositif réseau comprend un module matériel et un module de transfert, le module matériel étant configuré pour recevoir un signal d'entrée d'horloge ; l'ajustement (403) de la durée réelle du cycle de planification sur le premier dispositif réseau, de la durée initiale à la durée cible, comprend :
à chaque fois que le module matériel reçoit le signal d'entrée d'horloge, la détermination d'un nombre d'accumulation de signaux d'horloge sur la base du signal d'entrée d'horloge, et le stockage du nombre d'accumulation de signaux d'horloge dans un registre du module matériel ;
à un instant de début du cycle de planification en cours, la détermination, par le module de transfert, d'un nombre cible de signaux d'horloge pour le cycle de planification en cours sur la base du deuxième nombre de comptage d'horloge correspondant à la durée cible ;
interroger, par le module de transfert, le nombre d'accumulation de signaux d'horloge dans le registre ; si le nombre d'accumulation de signaux d'horloge obtenu atteint le nombre cible de signaux d'horloge, déterminer que le cycle de planification en cours est terminé, et mettre à jour le cycle de planification suivant à partir du cycle de planification en cours pour qu'il corresponde au cycle de planification en cours.

10. Procédé selon l'une quelconque des revendications 1 à 5, dans lequel le paquet est un paquet de test ou un paquet de données appartenant à un trafic déterministe ; si le paquet est un paquet de données, le procédé comprend en outre :
le stockage du paquet de données dans une file d'attente cyclique (CQ), correspondant au cycle de planification cible ; et
au cours du cycle de planification cible, l'envoi du paquet de données se trouvant dans la file d'attente cyclique (CQ) correspondant au cycle de planification cible vers un dispositif externe.

11. Dispositif réseau, comprenant : un processeur et un support de stockage lisible par machine, dans lequel le support de stockage lisible par machine stocke des instructions exécutables par le processeur ; le processeur est configuré pour exécuter les instructions exécutables par le processeur pour mettre en œuvre le procédé selon l'une quelconque des revendications 1 à 10.
